# EUROPÄISCHE PATENTSCHRIFT

(11) **EP 1 632 687 B1**
(45) Veröffentlichungstag und Bekanntmachung des Hinweises auf die Patenterteilung: **26.11.2008**
(21) Anmeldenummer: 05017263.4
(22) Anmeldetag: 09.08.2005
(51) Int. Cl.: F16D 21/06, F16D 13/58

(54) **Drehmomentübertragungseinrichtung**
Torque transmission device
Dispositif de transmission de couple

(30) Priorität: 03.09.2004 DE 102004042640; 22.10.2004 DE 102004051476
(43) Veröffentlichungstag der Anmeldung: 08.03.2006
(60) Teilanmeldung: 07014562.8
(73) Patentinhaber: LuK Lamellen und Kupplungsbau Beteiligungs KG, 77815 Bühl (DE)
(72) Erfinder: Friedmann, Oswald, 77839 Lichtenau (DE); Meinhard, Rolf, 77815 Bühl (DE)

(56) Entgegenhaltungen:
- EP-A1- 1 275 867
- DE-A1- 19 631 186
- US-A- 3 185 274

## Beschreibung

Die Erfindung betrifft eine Drehmomentübertragungseinrichtung im Antriebsstrang eines Kraftfahrzeugs mit einer Doppelkupplung zur Drehmomentübertragung zwischen einer Antriebseinheit, insbesondere einer Brennkraftmaschine, mit einer Abtriebswelle, insbesondere einer Kurbelwelle, und einem Getriebe, mit mindestens zwei Getriebeeingangswellen, die jeweils mit einer Reibbeläge aufweisenden Kupplungsscheibe einer der Kupplungen drehfest verbunden sind, wobei zwischen den Reibbelägen der einen Kupplungsscheibe und den Reibbelägen der anderen Kupplungsscheibe eine Zwischendruckplatte angeordnet ist, die drehfest mit der Abtriebswelle der Antriebseinheit verbunden ist, wobei die Reibbeläge der Kupplungsscheiben zwischen der Zwischendruckplatte und Druckplatten angeordnet sind, die mit Hilfe einer Betätigungseinrichtung in, bezogen auf die Getriebeeingangswellen, axialer Richtung relativ zu der Zwischendruckplatte bewegbar sind, um die Reibbeläge zwischen der Zwischendruckplatte und den Druckplatten einzuklemmen. Eine solche Drehmomentübertragungseinrichtung ist z. B. durch Figur 1 der US 3,185,274 bekannt.

Die beiden Kupplungsscheiben und die damit zusammenwirkenden Druckplatten bilden eine Doppelkupplung. Bei herkömmlichen Drehmomentübertragungseinrichtungen mit einer Doppelkupplung erweist sich die Lagerung der Doppelkupplung oft als kompliziert.

Aufgabe der Erfindung ist es, eine Drehmomentübertragungseinrichtung gemäß Oberbegriff des Anspruchs 1 zu schaffen, durch welche die Lagerung der Doppelkupplung verbessert und vereinfacht wird.

Die Aufgabe ist bei einer Drehmomentübertragungseinrichtung im Antriebsstrang eines Kraftfahrzeugs mit einer Doppelkupplung zur Drehmomentübertragung zwischen einer Antriebseinheit, insbesondere einer Brennkraftmaschine, mit einer Abtriebswelle, insbesondere einer Kurbelwelle, und einem Getriebe, mit mindestens zwei Getriebeeingangswellen, die jeweils mit einer Reibbeläge aufweisenden Kupplungsscheibe einer der Kupplungen drehfest verbunden sind, wobei zwischen den Reibbelägen der einen Kupplungsscheibe und den Reibbelägen der anderen Kupplungsscheibe eine Zwischendruckplatte angeordnet ist, die drehfest mit der Abtriebswelle der Antriebseinheit verbunden ist, wobei die Reibbeläge der Kupplungsscheiben zwischen der Zwischendruckplatte und Druckplatten angeordnet sind, die mit Hilfe einer Betätigungseinrichtung in, bezogen auf die Getriebeeingangswellen, axialer Richtung relativ zu der Zwischendruckplatte bewegbar sind, um die Reibbeläge zwischen der Zwischendruckplatte und den Druckplatten einzuklemmen, dadurch gelöst, dass die Doppelkupplung nur mittels der Zwischendruckplatte gelagert ist, indem diese zumindest an einer der Getriebeeingangswellen in axialer Richtung über eine Lagerung abgestützt ist, wodurch die in axialer Richtung wirkenden Betätigungskräfte der Doppelkupplung abgestützt werden. Dadurch wird eine steife und kompakte Lagerung für die Doppelkupplung geschaffen. Die Zwischendruckplatte kann direkt oder indirekt zum Beispiel über ein im Wesentlichen rohrförmiges Nabenteil, an einer der Getriebeeingangswellen gelagert sein.

Ein bevorzugtes Ausführungsbeispiel der Drehmomentübertragungseinrichtung ist dadurch gekennzeichnet, dass die Zwischendruckplatte mit Hilfe einer Lagereinrichtung, insbesondere eines Radiallagers, an einer der Getriebeeingangswellen, insbesondere an einer innen hohlen Getriebeeingangswelle, gelagert ist, in der eine weitere Getriebeeingangswelle drehbar angeordnet ist. Die Lagerung kann zum Beispiel durch ein Wälzlager oder ein Gleitlager erfolgen.

Ein weiteres bevorzugtes Ausführungsbeispiel der Drehmomentübertragungseinrichtung ist dadurch gekennzeichnet, dass an einer der Getriebeeingangswellen, insbesondere an der weiteren Getriebeeingangswelle, eine der Kupplungsscheiben lösbar, das heißt zerstörungsfrei trennbar, befestigt ist. Bei dem Lager für die Zwischendruckplatte handelt es sich zum Beispiel um ein Stützlager, das bei der Montage der Doppelkupplung auf einen an der hohlen Getriebeeingangswelle vorgesehenen Lagersitz geschoben und mit einem Sicherungsring in axialer Richtung fixiert wird. Anschließend wird dann eine der Kupplungsscheiben an der weiteren Getriebeeingangswelle befestigt.

Ein weiteres bevorzugtes Ausführungsbeispiel der Drehmomentübertragungseinrichtung ist dadurch gekennzeichnet, dass die an einer der Getriebeeingangswellen, insbesondere an der weiteren Getriebeeingangswelle, befestigte Kupplungsscheibe zweigeteilt ausgeführt ist. Die motorseitig an der weiteren Getriebeeingangswelle befestigte Kupplungsscheibe behindert den Zugang zu dem Sicherungsring. Durch die zweigeteilte Ausführung wird der Zugang zu der Lagerung der Zwischendruckplatte erleichtert.

Ein weiteres bevorzugtes Ausführungsbeispiel der Drehmomentübertragungseinrichtung ist dadurch gekennzeichnet, dass die an einer der Getriebeeingangswellen, insbesondere an der weiteren Getriebeeingangswelle, befestigte Kupplungsscheibe ein Nabenteil aufweist, von dem ein innerer Flanschring ausgeht, der lösbar, das heißt zerstörungsfrei trennbar, an einem äußeren Flanschring befestigt ist, an dem radial außen Reibbeläge angebracht sind. Der radial äußere Flanschring wird bei der Montage getriebeseitig vorzugsweise in die Doppelkupplung eingebaut. Der radial innere Flanschring mit dem Nabenteil wird der Doppelkupplung lose beigelegt und erst nach der Anbringung des Sicherungsrings montiert:

Ein weiteres bevorzugtes Ausführungsbeispiel der Drehmomentübertragungseinrichtung ist dadurch gekennzeichnet, dass die beiden Flanschringe durch mindestens eine Schraubverbindung miteinander verbunden sind. Vorteilhafterweise werden die beiden Flanschteile über einen Zentriersitz zentriert. Die beiden Flanschringe können zum Beispiel über eine Verzahnung formschlüssig miteinander verbunden sein. Vorzugsweise sind die beiden Flanschteile oder Flanschringe durch mindestens eine Schnappverbindung lösbar miteinander verbunden.

Ein weiteres bevorzugtes Ausführungsbeispiel der Drehmomentübertragungseinrichtung ist dadurch gekennzeichnet; dass eine der Getriebeeingangswellen als Hohlwelle ausgebildet ist, in der die weitere Getriebeeingangswelle drehbar angeordnet ist, wobei zwischen den beiden Getriebeeingangswellen ein im Wesentlichen rohrförmiges Nabenteil mit einem antriebsseitigen und einem getriebeseitigen Ende drehbar angeordnet ist, wobei an dem antriebsseitigen Ende des Nabenteils die Zwischendruckplatte befestigt ist. Die Befestigung erfolgt vorzugsweise durch Nieten. Die Befestigung der Zwischendruckplatte an dem Nabenteil kann aber auch durch Bördeln oder durch einen Zentriersitz mit einem Seegerring erfolgen.

Weitere bevorzugte Ausführungsbeispiele der Drehmomentübertragungseinrichtung sind dadurch gekennzeichnet, dass das Nabenteil im Bereich seines getriebeseitigen Endes in der Hohlwelle innerhalb der Hohlwelle an der Hohlwelle oder an der weiteren Getriebeeingangswelle gelagert ist. Die Lagerung kann durch ein Wälzlager erfolgen. Zur Schmierung kann das Lager mit dem Ölraum des Getriebes verbunden oder mit einer eigenen, autark abgedichteten Fettschmierung ausgestattet sein. Die Steifigkeit der Lagerung ist vorzugsweise so ausgelegt, dass die Eigenfrequenz der Kippschwingung -bezogen auf die erste Ordnung- oberhalb des Fahrbereichs liegt.

Dadurch, dass die Zwischendruckplatte in axialer Richtung an einer der Getriebeeingangswellen abgestützt ist, werden die in axialer Richtung wirkenden Betätigungskräfte der Doppelkupplung nicht mehr auf die Kurbelwelle übertragen.

Ein weiteres bevorzugtes Ausführungsbeispiel der Drehmomentübertragungseinrichtung ist dadurch gekennzeichnet, dass die Doppelkupplung in ein Kupplungsgehäuse vormontierbar ist. Das Kupplungsgehäuse wird auch als Kupplungsglocke bezeichnet. Die Zugänglichkeit der Vormontagepunkte wird zum Beispiel durch entsprechende Durchgriffsmöglichkeiten in der antriebsseitigen Kupplungsscheibe der Doppelkupplung ermöglicht.

Ein weiteres bevorzugtes Ausführungsbeispiel der Drehmomentübertragungseinrichtung ist dadurch gekennzeichnet, dass die Lagerstelle der vormontierten Doppelkupplung im Bereich oder in der Nähe des Schwerpunkts der Doppelkupplung angeordnet ist. Durch diese Anordnung der Lagerstelle beziehungsweise Lagereinrichtung der Zwischendruckplatte werden die Montage und der Transport der vormontierten Doppelkupplung vereinfacht.

Ein weiteres bevorzugtes Ausführungsbeispiel der Drehmomentübertragungseinrichtung ist dadurch gekennzeichnet, dass eine der Getriebeeingangswellen als Hohlwelle ausgebildet ist, in der die weitere Getriebeeingangswelle drehbar angeordnet ist, wobei die Zwischendruckplatte mit Hilfe einer Lagereinrichtung direkt an einer der Getriebeeingangswellen, insbesondere an der weiteren Getriebeeingangswelle, gelagert ist. Am antriebsseitigen Ende der weiteren Getriebeeingangswelle kann ein zusätzliches Pilotlager für die weitere Getriebeeingangswelle in der Abtriebswelle vorgesehen sein.

Ein weiteres bevorzugtes Ausführungsbeispiel der Drehmomentübertragungseinrichtung ist dadurch gekennzeichnet, dass eine der Getriebeeingangswellen als Hohlwelle ausgebildet ist, in der die weitere Getriebeeingangswelle drehbar angeordnet ist, wobei die Zwischendruckplatte mit Hilfe einer Lagereinrichtung auf einem Nabenlagerteil gelagert ist, das lösbar, das heißt zerstörungsfrei trennbar, an dem antriebsseitigen Ende der weiteren Getriebeeingangswelle befestigt ist. Die Befestigung des Nabenlagerteils kann zum Beispiel mit Hilfe einer Schraube erfolgen, die in eine entsprechende Gewindebohrung im antriebsseitigen Ende der weiteren Getriebeeingangswelle eingeschraubt ist.

Ein weiteres bevorzugtes Ausführungsbeispiel der Drehmomentübertragungseinrichtung ist dadurch gekennzeichnet, dass eine der Kupplungsscheiben drehfest mit dem Nabenlagerteil verbunden ist. Durch das Nabenlagerteil wird ermöglicht, dass beide Kupplungsscheiben die gleiche Nabengeometrie aufweisen. Am antriebsseitigen Ende des Nabenlagerteils kann ein zusätzliches Pilotlager für die weitere Getriebeeingangswelle in der Abtriebswelle vorgesehen sein.

Ein weiteres bevorzugtes Ausführungsbeispiel der Drehmomentübertragungseinrichtung ist dadurch gekennzeichnet, dass die Lagereinrichtung einen Lageraußenring, der radial innen an der Zwischendruckplatte befestigt ist, und/oder einen Lagerinnenring umfasst, der radial außen an der zugehörigen Getriebeeingangswelle befestigt ist. Die Lagereinrichtung ist vorzugsweise als Schrägkugellager, zum Beispiel als Rillenkugellager, ausgebildet. Der Lageraußenring kann auch in die Zwischendruckplatte integriert sein. Zwischen dem Lageraußenring und dem Lagerinnenring sind in bekannter Art und Weise Wälzkörper angeordnet.

Ein weiteres bevorzugtes Ausführungsbeispiel der Drehmomentübertragungseinrichtung ist dadurch gekennzeichnet, dass der Lagerinnenring einen Tragabschnitt aufweist, der radial innen so auf eine der Getriebeeingangswellen aufgeschoben ist, dass das getriebeseitige Ende des Tragabschnitts an einem Absatz anliegt, der an der zugehörigen Getriebeeingangswelle ausgebildet ist. Der Tragabschnitt hat im Wesentlichen die Gestalt eines Kreiszylindermantels. Radial außen bildet der Tragabschnitt eine Anlagefläche für die Wälzkörper der Lagereinrichtung. Statt des Absatzes kann auch ein Sicherungsring in axialer Richtung an der zugehörigen Getriebeeingangswelle fixiert sein.

Ein weiteres bevorzugtes Ausführungsbeispiel der Drehmomentübertragungseinrichtung ist dadurch gekennzeichnet, dass von dem antriebsseitigen Ende des Tragabschnitts ein Befestigungsabschnitt ausgeht, an dem ein Haltering lösbar, das heißt zerstörungsfrei trennbar, befestigt ist. Der Befestigungsabschnitt erstreckt sich im Wesentlichen in radialer Richtung. Der Haltering ist vorzugsweise mit Hilfe mindestens einer Schraubverbindung an dem Befestigungsabschnitt befestigt.

Ein weiteres bevorzugtes Ausführungsbeispiel der Drehmomentübertragungseinrichtung ist dadurch gekennzeichnet, dass der Haltering mit Hilfe mindestens einer Schraubverbindung an dem Befestigungsabschnitt des Lagerinnenrings befestigt ist. Die Schraubverbindung ist, zum Beispiel durch eine entsprechende Öffnung in der zugehörigen antriebsseitigen Kupplungsscheibe, bei der Montage zugänglich.

Ein weiteres bevorzugtes Ausführungsbeispiel der Drehmomentübertragungseinrichtung ist dadurch gekennzeichnet, dass der Haltering radial innen einen Fixierabschnitt aufweist, der, in Abhängigkeit von dem Verschraubungszustand der Schraubverbindung, so eine Schließkraft auf einen Verschlussring ausübt, dass der Verschlussring in eine Ringnut eingreift, die in der zugehörigen Getriebeeingangswelle vorgesehen ist. Dadurch wird auf einfache Art und Weise eine axiale Fixierung der Lagereinrichtung auf der zugehörigen Getriebeeingangswelle ermöglicht.

Ein weiteres bevorzugtes Ausführungsbeispiel der Drehmomentübertragungseinrichtung ist dadurch gekennzeichnet, dass der Verschlussring geschlitzt ausgebildet und so vorgespannt ist, dass er auf die zugehörige Getriebeeingangswelle aufgesteckt werden kann. Erst wenn die Schraube angezogen wird, wird die Vorspannkraft des Verschlussrings überwunden, um diesen in axialer Richtung in der Ringnut zu fixieren.

Ein weiteres bevorzugtes Ausführungsbeispiel der Drehmomentübertragungseinrichtung ist dadurch gekennzeichnet, dass der Lageraußenring, der Lagerinnenring, der Haltering und/oder der Verschlussring aus Blech gebildet sind. Dadurch können die Herstellkosten reduziert werden.

Ein weiteres bevorzugtes Ausführungsbeispiel der Drehmomentübertragungseinrichtung ist dadurch gekennzeichnet, dass zwischen die Abtriebswelle der Antriebseinheit und die Doppelkupplung eine Drehschwingungsdämpfungseinrichtung, insbesondere ein Zweimassenschwungrad, geschaltet ist, die ein Dämpfereingangsteil, das drehfest mit der Abtriebswelle der Antriebseinheit verbunden ist, und ein Dämpferausgangsteil umfasst, das lösbar, das heißt zerstörungsfrei trennbar, mit einem Doppelkupplungsgehäuseteil verbunden ist, an dem die Zwischendruckplatte befestigt. Bei der lösbaren Verbindung handelt es sich vorzugsweise um eine formschlüssige, axiale Steckverbindung, insbesondere mit komplementär ausgebildeten Verzahnungen. Das Eingangsteil der Schwingungsdämpfungseinrichtung ist an der Kurbelwelle zentriert. Die Doppelkupplung ist an einer der Getriebewellen zentriert. Ein eventuell auftretender Versatz in radialer Richtung kann an der Kontaktstelle zwischen dem Ausgangsteil der Schwingungsdämpfungseinrichtung und den Energiespeichern, insbesondere Bogenfedern, der Schwingungsdämpfungseinrichtung erfolgen. Die vorzugsweise als Steckverzahnung ausgebildete Steckverbindung gewährleistet eine ausreichende axiale Beweglichkeit der Doppelkupplung relativ zu der Schwingungsdämpfungseinrichtung. Dadurch wird die Montage vereinfacht. Die Primärteile oder Eingangsteile der Schwingungsdämpfungseinrichtung können auf die Kurbelwelle vormontiert werden. Außerdem werden im Betrieb auftretende axiale Schwingbewegungen der Kurbelwelle nicht auf die Kupplung übertragen.

Ein weiteres bevorzugtes Ausführungsbeispiel der Drehmomentübertragungseinrichtung ist dadurch gekennzeichnet, dass zwischen dem Doppelkupplungsgehäuseteil und dem Dämpferausgangsteil eine Federeinrichtung vorgespannt ist, durch die das Dämpferausgangsteil gegen eine Reib-/Gleiteinrichtung gedrückt wird, die zwischen dem Dämpfereingangsteil und dem Dämpferausgangsteil angeordnet ist. Bei der Federeinrichtung handelt es sich vorzugsweise um eine Tellerfeder. Die Reib-/Gleiteinrichtung ist entweder an dem Dämpfereingangsteil oder an dem Dämpferausgangsteil befestigt.

Ein weiteres bevorzugtes Ausführungsbeispiel der Drehmomentübertragungseinrichtung ist dadurch gekennzeichnet, dass das Dämpferausgangsteil an seiner Innenseite radial innerhalb der Reib-/Gleiteinrichtung eine Vertiefung zur Aufnahme eines Abschnitts des Doppelkupplungsgehäuseteils aufweist. Dadurch wird eine stabile, drehfeste Verbindung zwischen den durch die Steckverbindung verbundenen Teile gewährleistet.

Ein weiteres bevorzugtes Ausführungsbeispiel der Drehmomentübertragungseinrichtung ist dadurch gekennzeichnet, dass das Doppelkupplungsgehäuseteil aus Blech gebildet ist und einen Flanschbereich aufweist, der zur Befestigung des Doppelkupplungsgehäuseteils an der Zwischendruckplatte dient. Vorzugsweise umfasst der Flanschbereich mehrere Füße mit Durchgangslöchern zum Durchführen von Befestigungsmitteln, wie Schrauben oder Nieten.

Ein weiteres bevorzugtes Ausführungsbeispiel der Drehmomentübertragungseinrichtung ist dadurch gekennzeichnet, dass das Doppelkupplungsgehäuseteil einen Außenverzahnungsbereich aufweist, der einstückig mit dem Flanschbereich und komplementär zu einer Innenverzahnung ausgebildet ist, die radial innen an dem Dämpferausgangsteil vorgesehen ist. Durch die komplementär ausgebildeten Verzahnungen wird auf einfache Art und Weise eine drehfeste Steckverbindung zwischen dem Doppelkupplungsgehäuseteil und dem Ausgangsteil der Schwingungsdämpfungseinrichtung ermöglicht.

Ein weiteres bevorzugtes Ausführungsbeispiel der Drehmomentübertragungseinrichtung ist dadurch gekennzeichnet, dass der Außenverzahnungsbereich in radialer Richtung zwischen dem Innendurchmesser und dem Außendurchmesser der Reibbeläge der benachbarten Kupplungsscheibe angeordnet ist. Diese Anordnung hat sich im Rahmen der vorliegenden Erfindung als besonders vorteilhaft herausgestellt.

Ein weiteres bevorzugtes Ausführungsbeispiel der Drehmomentübertragungseinrichtung ist dadurch gekennzeichnet, dass radial innerhalb des Außenverzahnungsbereichs ein Versteifungsrand an dem Doppelkupplungsgehäuseteil ausgebildet ist. Alternativ könnte zur Versteifung auch innen ein weiteres Teil eingelegt werden.

Ein weiteres bevorzugtes Ausführungsbeispiel der Drehmomentübertragungseinrichtung ist dadurch gekennzeichnet, dass das Dämpferausgangsteil im Wesentlichen die Gestalt einer aus Blech gebildeten Kreisringscheibe aufweist, an der radial innen eine Innenverzahnung und radial außen mindestens ein Mitnehmerfinger oder Mitnehmerarm ausgebildet ist, der in eine Energiespeichereinrichtung der Drehschwingungsdämpfungseinrichtung eingreift. Die Innenverzahnung kann durchgehend ausgebildet sein. Die Innenverzahnung kann aber auch zur Verstärkung in Umfangsrichtung Bereiche ohne Verzahnung aufweisen, um das Deformationsverhalten des Doppelkupplungsgehäuseteils zu verbessern. Das Dämpferausgangsteil kann ein- oder mehrteilig ausgebildet sein.

Ein weiteres bevorzugtes Ausführungsbeispiel der Drehmomentübertragungseinrichtung ist dadurch gekennzeichnet, dass an dem Dämpferausgangsteil radial außen diametral entgegengesetzt zwei Mitnehmerfinger oder Mitnehmerarme ausgebildet sind. Dadurch wird eine ausreichende Funktion der Drehschwingungsdämpfungseinrichtung gewährleistet.

Ein weiteres bevorzugtes Ausführungsbeispiel der Drehmomentübertragungseinrichtung ist dadurch gekennzeichnet, dass im Bereich der Mitnehmerfinger in dem Dämpferausgangsteil jeweils ein radial verlaufender Schlitz ausgebildet ist. Die Schlitze dienen dazu, das Ausgangsteil elastisch auszubilden. Dadurch ist es möglich, die Verbindung zwischen dem Dämpferausgangsteil und dem Doppelkupplungsgehäuseteil im zusammengebauten Zustand vorzuspannen.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine Drehmomentübertragungseinrichtung mit einer zweigeteilten Kupplungsscheibe im Längsschnitt;
- Figur 2: die Drehmomentübertragungseinrichtung aus Figur 1 bei der Montage der zweigeteilten Kupplungsscheibe;
- Figur 3: die Drehmomentübertragungseinrichtung aus Figur 1 vor dem Einbau einer Drehschwingungsdämpfungseinrichtung;
- Figur 4: eine Drehmomentübertragungseinrichtung mit einer so genannten Auf-RohrLagerung im Längsschnitt, die nicht Gegenstand der Erfindung ist;
- Figur 5: eine Drehmomentübertragungseinrichtung mit einer so genannten Im-Rohr-Lagerung im Längsschnitt, die nicht Gegenstand der Erfindung ist;
- Figur 6: eine Drehmomentübertragungseinrichtung mit einer in axialer Richtung an einer der Getriebeeingangswellen abgestützten Zwischendruckplatte bei der Montage im Längsschnitt;
- Figur 7: eine ähnliche Drehmomentübertragungseinrichtung wie in Figur 6 im zusammengebauten Zustand;
- Figur 8: eine ähnliche Darstellung wie in Figur 7, wobei die Zwischendruckplatte auf einer Getriebehohlwelle gelagert ist;
- Figur 9: ein weiteres Ausführungsbeispiel, bei dem die Zwischendruckplatte auf einem Nabenlagerteil gelagert ist, das am Ende einer der Getriebeeingangswellen befestigt ist;
- Figur 10: ein weiteres Ausführungsbeispiel, bei dem die Lagerung der Zwischendruckplatte zum Antrieb hin versetzt ist;
- Figur 11: einen vergrößerten Ausschnitt aus Figur 8;
- Figur 12: eine perspektivische Darstellung eines Dämpferausgangsteils, das auf ein Kupplungsgehäuseteil aufsteckbar ist;
- Figur 13: einen vergrößerten Ausschnitt aus Figur 12;
- Figur 14: ein Dämpferausgangsteil gemäß einem weiteren Ausführungsbeispiel in der Draufsicht;
- Figur 15: ein Dämpferausgangsteil in einer geschlitzten Variante;
- Figur 16: ein Dämpferausgangsteil in einer zweiteiligen Ausführung und
- Figur 17: eine Drehmomentübertragungseinrichtung gemäß einem weiteren Ausführungsbeispiel, bei dem die Kupplungsscheiben der Doppelkupplung jeweils über einen separaten Dämpfer mit der zugehörigen Getriebeeingangswelle gekoppelt sind.

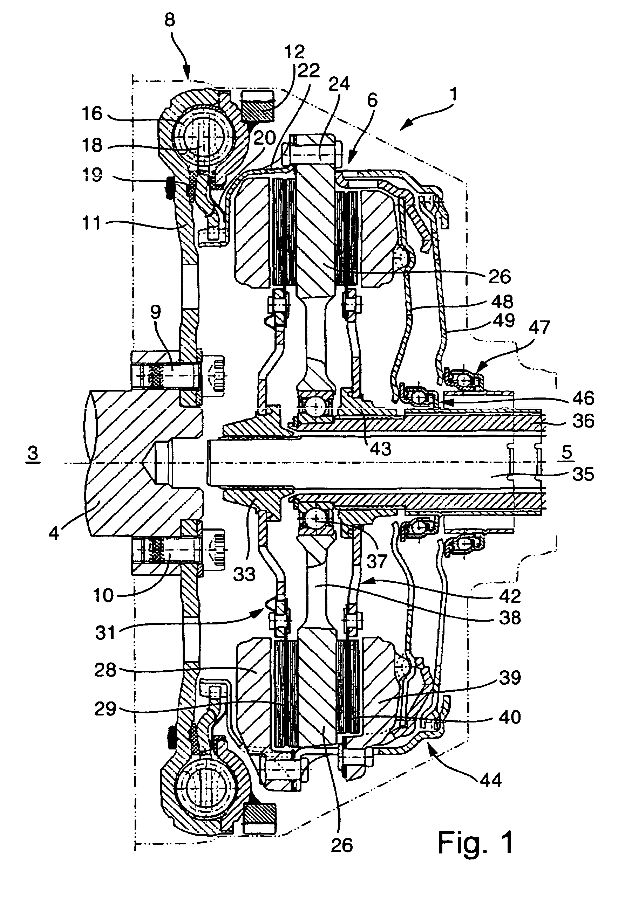

In Figur 1 ist ein Teil eines Antriebsstrangs 1 eines Kraftfahrzeugs dargestellt. Zwischen einer Antriebseinheit 3, insbesondere einer Brennkraftmaschine, von der eine Kurbelwelle 4 ausgeht, und einem Getriebe 5 ist eine Doppelkupplung 6 angeordnet. Zwischen die Antriebseinheit 3 und die Doppelkupplung 6 ist eine Schwingungsdämpfungseinrichtung 8 geschaltet. Bei der Schwingungsdämpfungseinrichtung 8 handelt es sich um ein Zweimassenschwungrad.

Die Kurbelwelle 4 der Brennkraftmaschine 3 ist über Schraubverbindungen 9, 10 fest mit einem Eingangsteil 11 der Drehschwingungsdämpfungseinrichtung 8 verbunden. Das Eingangsteil 11 der Drehschwingungsdämpfungseinrichtung 8 hat im Wesentlichen die Gestalt einer sich in radialer Richtung erstreckenden Kreisringscheibe, die radial außen einen Schwingungsdämpferkäfig bildet. An dem Eingangsteil 11 ist radial außen ein Anlasserzahnkranz 12 befestigt. In dem Schwingungsdämpferkäfig ist mindestens eine Energiespeichereinrichtung, insbesondere eine Federeinrichtung 16, zumindest teilweise aufgenommen. In die Federeinrichtung 16 greift ein Ausgangsteil 18 der Schwingungsdämpfungseinrichtung 8 ein. Zwischen dem Eingangsteil 11 und dem Ausgangsteil 18 ist ein Gleit-/Reibring 19 angeordnet, der an dem Eingangsteil 11 befestigt ist. Zwischen dem Ausgangsteil 18 und einem Kupplungsgehäuseteil 22 ist eine Tellerfeder 20 so vorgespannt, dass das Ausgangsteil 18 der Drehschwingungsdämpfungseinrichtung 8 gegen den Gleit-/Reibring 19 gedrückt wird.

Radial innen ist das Ausgangsteil 18 der Drehschwingungsdämpfungseinrichtung 8 lösbar, das heißt zerstörungsfrei trennbar, mit dem Kupplungsgehäuseteil 22 verbunden. An dem Kupplungsgehäuseteil 22 ist mit Hilfe von Nietverbindungen, von denen in der Schnittdarstellung nur eine Nietverbindung 24 zu sehen ist, eine Zwischendruckplatte 26 befestigt. Antriebsseitig sind zwischen der Zwischendruckplatte 26 und einer Druckplatte 28 Reibbeläge 29 einer ersten Kupplungsscheibe 31 einklemmbar. Die erste Kupplungsscheibe 31 ist über ein Nabenteil 33 drehfest mit einer ersten Getriebeeingangswelle 35 verbunden, die als Vollwelle ausgebildet ist. Die erste Getriebeeingangswelle 35 ist in einer zweiten Getriebeeingangswelle 36, die als Hohlwelle ausgebildet ist, drehbar angeordnet. An dem antriebsseitigen Ende der zweiten Getriebeeingangswelle 36 ist mit Hilfe eines Wälzlagers 37 ein Nabenteil 38 drehbar gelagert, an dem radial außen die Zwischendruckplatte 26 angebracht ist. Getriebeseitig sind zwischen der Zwischendruckplatte 26 und einer Druckplatte 39 Reibbeläge 40 einer zweiten Kupplungsscheibe 42 einklemmbar. Die zweite Kupplungsscheibe 42 ist über ein Nabenteil 43 drehfest mit der zweiten Getriebeeingangswelle 36 verbunden.

Die Doppelkupplung 6 weist ein Kupplungsgehäuse 44 auf, an dem die Druckplatten 28, 39 axial verschiebbar drehfest angebracht sind. Außerdem ist die Zwischendruckplatte 26 an dem Kupplungsgehäuse 44 befestigt. Das Kupplungsgehäuse 44 ist über das Kupplungsgehäuseteil 22 und die Drehschwingungsdämpfungseinrichtung 8 mit der Kurbelwelle 4 verbunden. Die Doppelkupplung 6 wird in bekannter Art und Weise über Betätigungseinrichtungen 46, 47, die mit Betätigungshebeln 48, 49 zusammenwirken, betätigt.

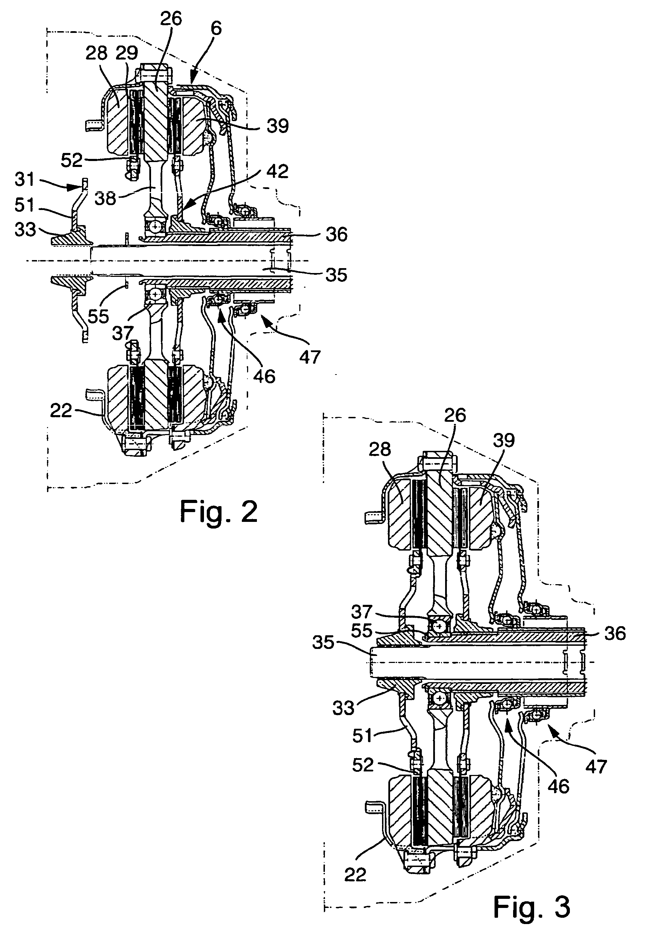

In Figur 2 ist die Doppelkupplung 6 bei der Montage dargestellt. Die zweite Kupplungsscheibe 42 und das Nabenteil 38 mit der Zwischendruckplatte 26 sowie dem Wälzlager 37 sind getriebeseitig vormontiert. Außerdem sieht man in Figur 2, dass die erste Kupplungsscheibe 31 einen inneren Flanschring 51, der an dem Nabenteil 33 befestigt ist, und einen äußeren Flanschring 52 umfasst, an dem die Reibbeläge 29 befestigt sind. In Figur 2 sind die Reibbeläge 29 mit dem äußeren Flanschring 52 sowie die Druckplatte 28 antriebsseitig vormontiert. Das Nabenteil 33 mit dem inneren Flanschring 51 der ersten Kupplungsscheibe 31 ist noch nicht montiert. In diesem Zustand kann ein Sicherungsring 55 zur axialen Fixierung des Wälzlagers 37 an dem getriebeseitigen Ende der zweiten Getriebeeingangswelle 36 befestigt werden. Danach kann dann das Nabenteil 33 mit dem inneren Flanschring an dem äußeren Flanschring befestigt werden.

In Figur 3 ist die erste Kupplungsscheibe 31 im montierten Zustand dargestellt. In einem nächsten Montageschritt wird dann die Verbindung zwischen dem Kupplungsgehäuseteil 22 und dem Ausgangsteil 18 der Drehschwingungsdämpfungseinrichtung 8 hergestellt.

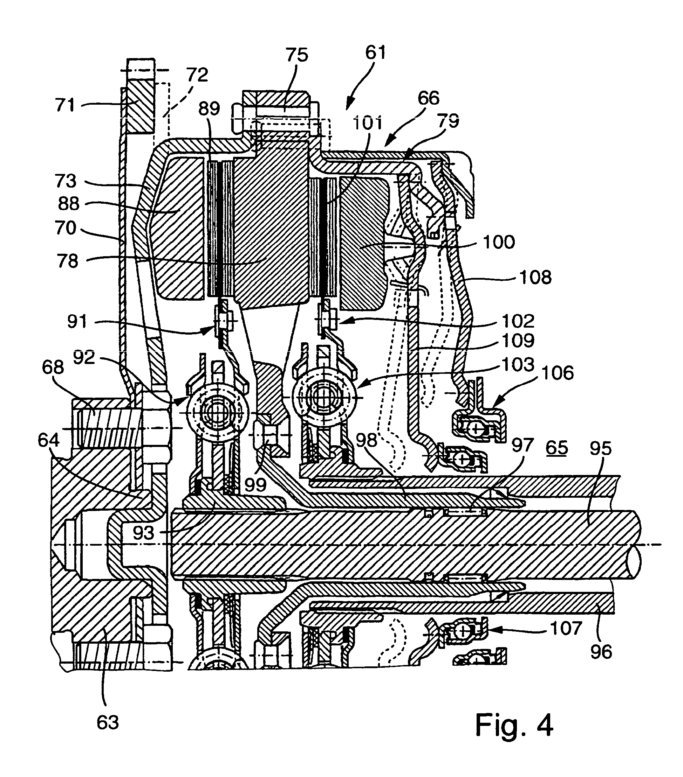

In Figur 4 die eine der Erfindung nicht entsprechenden Drehmomentübertragungseinrichtung darstellt, ist ein Teil eines Antriebsstrangs 61 eines Kraftfahrzeugs dargestellt. Zwischen einer Antriebseinheit 63, insbesondere einer Brennkraftmaschine, von der eine Kurbelwelle 64 ausgeht, und einem Getriebe 65 ist eine Doppelkupplung 66 angeordnet. Die Kurbelwelle 64 der Brennkraftmaschine 63 ist über Schraubverbindungen 68 drehfest mit einer so genannten Flex Plate 70 verbunden. Radial außen ist an der Flex Plate 70 ein Anlasserzahnkranz 71 befestigt. An dem Anlasserzahnkranz 71 sind mehrere Flügel 72 befestigt, die von einem Trägerblech 73 ausgehen. Das Trägerblech 73 ist fest mit der Kurbelwelle 64 verbunden. Über Schraubverbindungen 75 ist an dem Trägerblech 73 radial außen eine Zwischendruckplatte 78 sowie ein Kupplungsgehäuseteil 79 befestigt.

Antriebsseitig sind zwischen der Zwischendruckplatte 78 und einer Druckplatte 88 Reibbeläge 89 einer ersten Kupplungsscheibe 91 einklemmbar. Die erste Kupplungsscheibe 91 ist unter Zwischenschaltung einer Drehschwingungsdämpfungseinrichtung 92 mit einem Nabenteil 93 gekoppelt, das drehfest mit einer ersten Getriebeeingangswelle 95 verbunden ist. Die erste Getriebeeingangswelle 95 ist als Vollwelle ausgebildet und drehbar in einer zweiten Getriebeeingangswelle 96 angeordnet, die als Hohlwelle ausgebildet ist.

Mit Hilfe eines Nadellagers 97 ist ein rohrförmiges Nabenteil 98 drehbar auf der ersten Getriebeeingangswelle 95 gelagert. Das rohrförmige Nabenteil 98 ist zwischen den beiden Getriebeeingangswellen 95 und 96 angeordnet. Antriebsseitig weist das rohrförmige Nabenteil 98 einen sich konisch erweiternden Bereich auf, an dem radial außen mit Hilfe von Nietverbindungen 99 die Zwischendruckplatte 78 befestigt ist.

Getriebeseitig sind zwischen der Zwischendruckplatte 78 und einer Druckplatte 100 Reibbeläge 101 einer zweiten Kupplungsscheibe 102 einklemmbar. Die zweite Kupplungsscheibe 102 ist über eine Drehschwingungsdämpfungseinrichtung 103 mit einem Nabenteil 104 gekoppelt, das drehfest mit der zweiten Getriebeeingangswelle 96 verbunden ist.

Die beiden Druckplatten 88 und 100 sind in bekannter Art und Weise mit Hilfe von Betätigungseinrichtungen 106, 107 und Betätigungshebeln 108, 109 in axialer Richtung relativ zu der zwischendruckplatte 78 bewegbar. Die Lagerung und Drehmomentübertragung von der Kurbelwelle 64 auf die Doppelkupplung 66 erfolgt über das Trägerblech 73 und die Flex Plate 70. Das rohrförmige Nabenteil 98 ist radial zwischen den beiden Getriebeeingangswellen 95 und 96 des Doppelkupplungsgetriebes angeordnet.

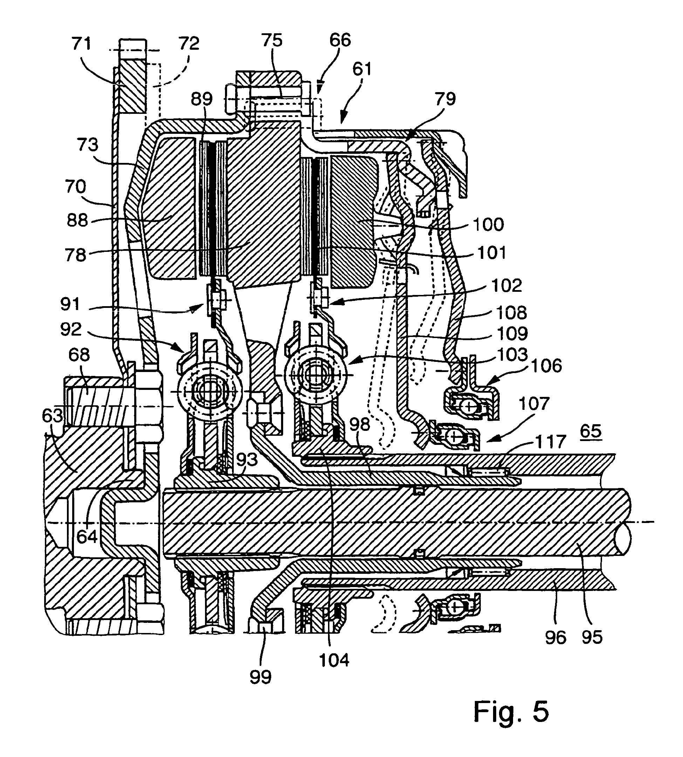

Bei dem in Figur 5 dargestellten Beispiel das die Erfindung nicht darstellt handelt es sich um eine ähnliche Drehmomentübertragungseinrichtung wie in Figur 4. Zur Bezeichnung gleicher Teile werden die gleichen Bezugszeichen verwendet. Um Wiederholungen zu vermeiden, wird auf die vorangegangene Beschreibung der Figur 4 verwiesen. Im Folgenden wird nur auf die Unterschiede zwischen den beiden Beispielen eingegangen.

Bei dem in Figur 4 gezeigten Beispiel ist das rohrförmige Nabenteil 98 auf der Vollwelle 95 gelagert. Bei dem in Figur 5 dargestellten Beispiel ist das rohrförmige Nabenteil 98 in der Hohlwelle 96 gelagert, und zwar mit Hilfe eines Nadellagers 117.

Bei den in den Figuren 1 bis 5 dargestellten Beispielen stützt sich die Einrückkraft beim Betätigen der Doppelkupplung auf der Kurbelwelle ab. Zur Erhöhung der Steifigkeit ist das Trägerblech 73 bei den in den Figuren 4 und 5 dargestellten Beispielen vorzugsweise mit konischen Flächen gebildet und weist Luftlöcher auf, um eine gute Kühlung der Doppelkupplung 66 zu gewährleisten. Zur Erhöhung der Steifigkeit weist das rohrförmige Nabenteil 98 im Übergangsbereich der Zwischendruckplatte 78 den konischen Bereich auf. Das rohrförmige Nabenteil 98 selbst kann aus einem induktiv härtbaren, oder einsatzfähigen tiefgezogenen Blechteil oder aus einem entsprechenden Schmiedeteil gebildet sein.

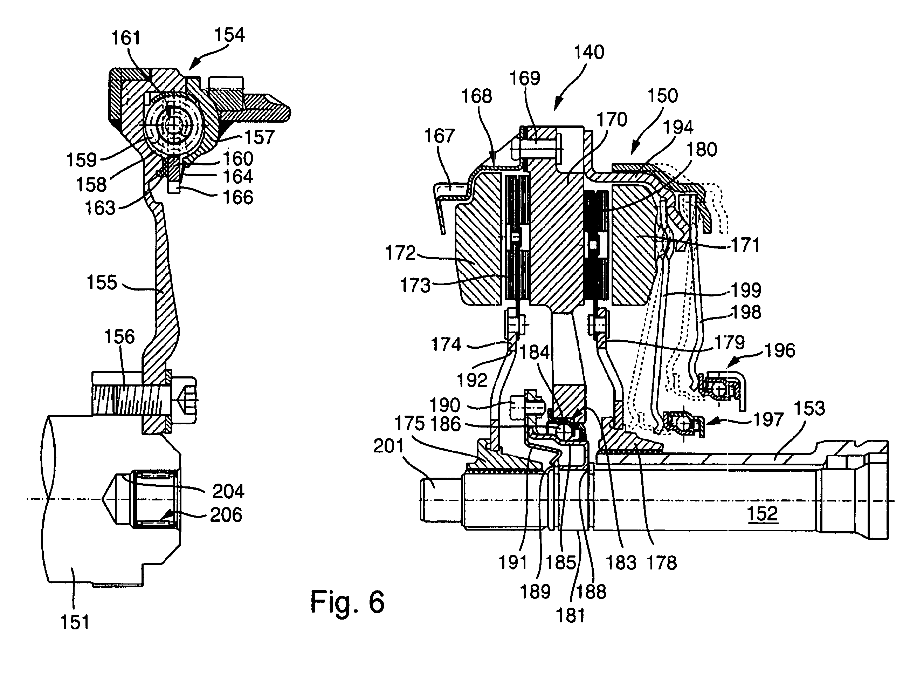

In Figur 6 ist eine Drehmomentübertragungseinrichtung Im Längsschnitt dargestellt, die auch als Kupplungsaggregat 140 bezeichnet wird. Das Kupplungsaggregat 140 umfasst eine Doppelkupplung 150, die eine treibende Welle 151, insbesondere eine Kurbelwelle eines Kraftfahrzeugmotors, mit zwei antreibbaren Wellen 152, 153, wie insbesondere Getriebeeingangswellen, verbinden und von diesen trennen kann. Die Doppelkupplung 150 ist über einen Schwingungsdämpfer 154 mit dem Kraftfahrzeugmotor, der auch als Brennkraftmaschine bezeichnet wird, verbindbar. Die von der Kurbelwelle 151 her in dem Dämpfer 154 eingeleiteten Torsionsschwingungen werden dadurch zumindest im Wesentlichen gefiltert, so dass diese zumindest nicht voll auf die Doppelkupplung 150 beziehungsweise auf die Getriebewellen 152, 153 übertragen werden.

Bezüglich des prinzipiellen Aufbaus und der Funktion des Dämpfers 154, der hier Bestandteil eines so genannten Zweimassenschwungrads ist, beziehungsweise ein solches Zweimassenschwungrad bildet, wird auf die DE-OS 197 28 422, die DE-OS 195 22 718, die DE-OS 41 22 333, die DE-OS 41 17 582 und die DE-OS 41 17 579 verwiesen. Der Dämpfer 154 besitzt ein Eingangsteil 155, das über radial innere Bereiche mit der Kurbelwelle 151, zum Beispiel mittels Schrauben 156, fest verbunden ist. Das Eingangsteil 155 ist hier durch ein Blechformteil gebildet, das radial außen ein weiteres Bauteil 157 trägt, das hier ebenfalls durch ein Blechformteil gebildet ist. Die beiden Bauteile 155 und 157 begrenzen eine ringförmige Kammer 158, in der zumindest die Energiespeicher, hier in Form von Schraubenfedern 159, wenigstens eines Dämpfers aufgenommen sind. Die Kammer 158 ist vorzugsweise zumindest radial nach außen hin abgedichtet und enthält zumindest eine kleine Menge viskoses Medium, das vorzugsweise von einem Schmiermittel gebildet wird. Das von der Kurbelwelle 151 in das Kupplungsaggregat 140 eingeleitete Drehmoment wird über das Eingangsteil 155, 157 auf die Energiespeicher 159 übertragen und von dort über ein ebenfalls an den Energiespeichern 159 angreifendes Ausgangsteil 160 an die Doppelkupplung 150 weitergeleitet. Das Ausgangsteil 160 ist hier durch ein flanschartiges Bauteil gebildet, das in die Kammer 158 radial von innen her eingreift und über Arme oder Finger 161 mit den Endbereichen der Energiespeicher 159 zusammenwirkt.

Zwischen dem Eingangsteil 155 und dem Ausgangsteil 160 ist ein Gleit-/Reibring 163 angeordnet, der an dem Eingangsteil 155 befestigt ist. Zwischen dem Ausgangsteil 160 und dem Bauteil 157 ist eine Tellerfeder 164 so vorgespannt, dass das Ausgangsteil 160 der Drehschwingungsdämpfungseinrichtung 154 gegen den Gleit-/Reibring 163 gedrückt wird.

Radial innen ist das Ausgangsteil 160 der Drehschwingungsdämpfungseinrichtung 154 mit einer Innenverzahnung 166 ausgestattet. Die Innenverzahnung 166 des Ausgangsteils 160 ist komplementär zu einer Außenverzahnung 167 ausgebildet, die an einem Kupplungsgehäuseteil 168 ausgebildet ist. Die Verzahnung ist so ausgelegt, dass die Drehschwingungsdämpfungseinrichtung 154 mit dem Ausgangsteil 160 auf das Kupplungsgehäuseteil 168 in axialer Richtung aufsteckbar ist. Das Kupplungsgehäuseteil 168 ist durch die Verbindungen 169, von denen in der Schnittdarstellung der Figur 6 nur eine Nietverbindung dargestellt ist, an einer Zwischendruckplatte 170 befestigt. Die Zwischendruckplatte 170 wirkt mit Druckplatten 171, 172 zusammen, die getriebeseitig und antriebsseitig vorgesehen sind. Zwischen der Zwischendruckplatte 170 und der Druckplatte 172 sind Reibbeläge 173 einklemmbar, die radial außen an einer ersten Kupplungsscheibe 174 befestigt sind. Die erste Kupplungsscheibe 174 ist radial innen an einem Nabenteil 175 befestigt, das drehfest an der Getriebewelle 152 befestigt ist, die als Vollwelle ausgebildet ist.

Die Vollwelle 172, die auch als erste Getriebeeingangswelle bezeichnet wird, ist in der zweiten Getriebeeingangswelle 153, die als Hohlwelle ausgebildet ist, drehbar angeordnet. An dem antriebsseitigen Ende der zweiten Getriebeeingangswelle 153 ist ein Nabenteil 178 drehfest angebracht, an dem radial außen eine zweite Kupplungsscheibe 179 befestigt ist. An der zweiten Kupplungsscheibe 179 wiederum sind radial außen Reibbeläge 180 befestigt, die zwischen der Zwischendruckplatte 170 und der Druckplatte 171 einklemmbar sind.

Die als Vollwelle ausgebildete Getriebewelle 152 weist zwischen dem Nabenteil 175 und dem Nabenteil 178 einen Wellenabschnitt 181 auf, auf den eine Lagereinrichtung 183 für die Zwischendruckplatte 170 montiert ist. Die Lagereinrichtung 183 umfasst einen Lageraußenring 184, der radial innen an der Zwischendruckplatte 170 befestigt ist, und einen Lagerinnenring 185, der radial außen auf dem Wellenabschnitt 181 angeordnet ist. Zwischen dem Lagerinnenring 185 und dem Lageraußenring 184 sind Wälzkörper 186, in Form von Kugel oder Rollen, angeordnet. Der Lagerinnenring 185 ist in axialer Richtung durch Sicherungsringe 188, 189, die in entsprechenden Nuten der Vollwelle 152 angebracht sind, in axialer Richtung fixiert. Der Sicherungsring 189 ist geschlitzt ausgebildet und wird auch als Verschlussring bezeichnet. Radial außen ist an dem Lagerinnenring 185 mit Hilfe einer Schraube 190 ein Haltering 191 befestigt, durch den der Verschlussring 189 in seiner zugehörigen Ringnut in der Vollwelle 152 fixiert wird.

In Figur 6 ist das Kupplungsaggregat 140 im vormontierten Zustand dargestellt. Die Drehschwingungsdämpfungseinrichtung 154, die auch als Zweimassenschwungrad bezeichnet wird, ist auf die Kurbelwelle 158 vormontiert. Die Doppelkupplung 150 ist mit Hilfe der Lagereinrichtung 183 auf die Getriebeeingangswelle 152 vormontiert. Die Nabenteile 175, 178 sind drehfest mit den jeweiligen Getriebewellen 152, 153 verbunden. Bei der Montage sind die Lagereinrichtung 183 und insbesondere die Schraube 190, die zur Montage und insbesondere zur axialen Fixierung der Lagereinrichtung 183 dient, durch eine Öffnung 192 in der ersten Kupplungsscheibe 174 von außen zugänglich. Die axiale Fixierung der Lagereinrichtung 183 zwischen den Sicherungsringen 188, 189 auf dem Wellenabschnitt 181 der Getriebewelle 152 wird mit Hilfe der Schraube 190 und dem Haltering 191 erreicht. Durch die axiale Abstützung der Zwischendruckplatte 170 auf der Getriebewelle 152 wird der Kraftfluss bei einer Betätigung der Doppelkupplung 150 geschlossen. Die Getriebeeingangswellen 152, 153 sind getriebeseitig mit einer Schrägverzahnung ausgestattet, welche die Aufnahme von Axialkräften ermöglicht. Gemäß einem Aspekt der vorliegenden Erfindung wird das Ausgangsteil 160 des Zweimassenschwungrads 154 nicht durch ein zusätzliches Lager zentriert. Gemäß einem weiteren Aspekt der vorliegenden Erfindung ist die Lagereinrichtung 183 im Bereich beziehungsweise in der Nähe des Schwerpunkts der Doppelkupplung 150 angeordnet. Dadurch wird eine stabile Abstützung der Doppelkupplung 150 beim Transport und bei der Montage ermöglicht.

Die Doppelkupplung 150 weist ein Kupplungsgehäuse 194 auf, an dem die Zwischendruckplatte 170 befestigt ist. Die Druckplatten 171, 172 sind drehfest, aber axial verschiebbar an dem Kupplungsgehäuse 194 angebracht. Das Kupplungsgehäuse 194 kann über die Verzahnung 166, 167 drehfest mit der Kurbelwelle 151 verbunden werden. Die Doppelkupplung 150 wird in bekannter Art und Weise über Betätigungseinrichtungen 196, 197 betätigt, die mit Betätigungshebeln 198, 199 zusammenwirken.

An dem antriebsseitigen Ende der Getriebewelle 152 ist ein Lagerzapfen 201 ausgebildet, der in eine Sackbohrung 204 aufnehmbar ist, die in dem getriebeseitigen Ende der Kurbelwelle 151 ausgebildet ist. In der Sackbohrung 204 ist ein Nadellager 206 angeordnet, das auch als Pilotlager bezeichnet wird.

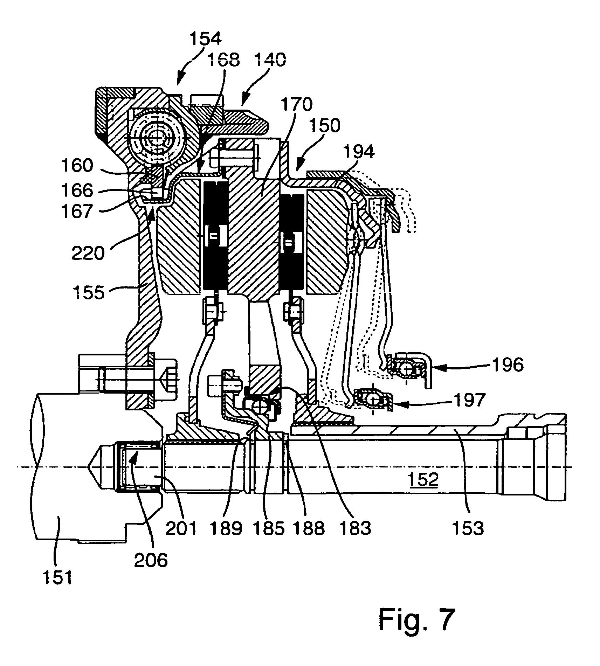

In Figur 7 ist eine ähnliche Drehmomentübertragungseinrichtung 140, wie sie in Figur 6 dargestellt ist, im montierten Zustand dargestellt. Aus Gründen der Übersichtlichkeit sind nicht alle Teile mit Bezugszeichen versehen. Im montierten Zustand ist das Ausgangsteil 160 des Zweimassenschwungrads 154 durch seine Innenverzahnung 166 mit der Außenverzahnung 167 des Kupplungsgehäuseteils 168 drehfest verbunden. Die Verbindung wird auch als axiale Steckverbindung 220 bezeichnet. Bei der Montage des Getriebes auf den Motorblock wird die Verbindung der Doppelkupplung 150 mit dem Zweimassenschwungrad 154 über die Steckverzahnung 220 hergestellt. Dabei kann sich das Ausgangsteil 160, der Drehschwingungsdämpfungseinrichtung 154, das auch als Ausgangsflansch bezeichnet wird, auf dem Kupplungsgehäuseteil 168 zentrieren. Eine Lagerung, insbesondere radiale Lagerung, zwischen dem Eingangsteil 155 und dem Ausgangsteil 160 des Zweimassenschwungrads 154 ist nicht erforderlich. Durch die Steckverzahnung 220 bleibt eine axiale Verschiebbarkeit erhalten, die eine Entkopplung von Schwingungen gewährleistet. Die Lagereinrichtung 183 liegt günstig zum Schwerpunkt der Doppelkupplung 150. Im montierten Zustand der Doppelkupplung 150 ist der Lagerzapfen 201 der Getriebewelle 152 durch das Nadellager 206 in der Kurbelwelle 151 gelagert. Die Lagerung wird auch als Pilotlagerung bezeichnet und dient dazu, die radiale Abstützung der Kupplungsmasse zu verbessern. Durch die Pilotlagerung wird darüber hinaus ein geringerer radialer Versatz der Getriebewelle 152 zur Kurbelwelle 151 erreicht.

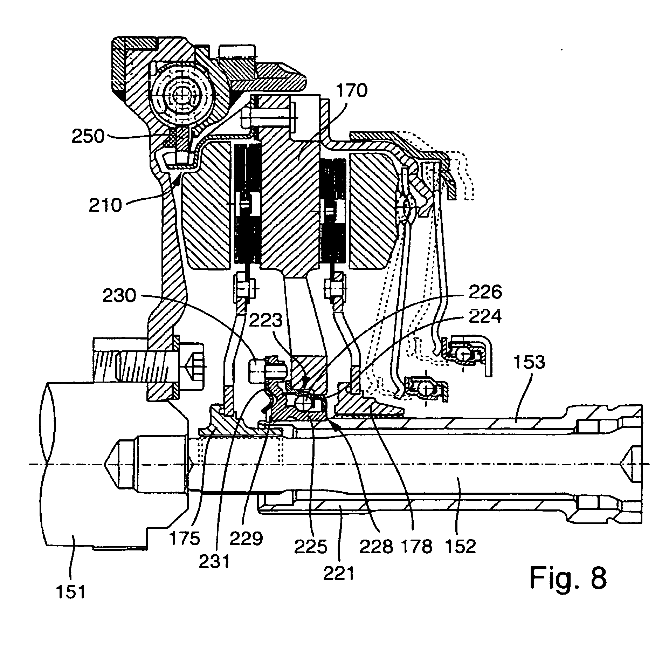

In Figur 8 ist eine Drehmomentübertragungseinrichtung gemäß einem weiteren Ausführungsbeispiel dargestellt. Zur Bezeichnung gleicher Teile werden die gleichen Bezugszeichen verwendet wie bei den vorangegangenen Ausführungsbeispielen, wobei aus Gründen der Übersichtlichkeit die für das Verständnis nicht maßgeblichen Bezugszeichen in Figur 8 weggelassen werden. Im Folgenden wird nur auf die Unterschiede zwischen den einzelnen Ausführungsbeispielen eingegangen.

Bei dem in Figur 8 dargestellten Ausführungsbeispiel ist die Zwischendruckplatte nicht auf der ersten Getriebewelle 152, die als Vollwelle ausgebildet ist, sondern auf der zweiten Getriebewelle 153 gelagert, die als Hohlwelle ausgebildet ist. Die Getriebehohlwelle 153 weist an ihrem antriebsseitigen Ende einen Wellenabschnitt 221 auf, auf den eine Lagereinrichtung 223 montiert ist. Die Lagereinrichtung 223 weist einen Lageraußenring 224 auf, der radial innen an der Zwischendruckplatte 170 befestigt ist. Außerdem weist die Lagereinrichtung 223 einen Lagerinnenring 225 auf, der radial außen auf dem Wellenabschnitt 221 der Getriebehohlwelle 153 angeordnet ist. Zwischen dem Lagerinnenring 225 und dem Lageraußenring 224 sind Wälzkörper 226 angeordnet.

Der Lagerinnenring 225 ist getriebeseitig in axialer Richtung an einem Absatz 228 fixiert, der an der Getriebewelle 153 angebracht ist. Antriebsseitig ist der Lagerinnenring 225 durch einen Sicherungsring 229 fixiert, der auch als Verschlussring bezeichnet wird und in eine Ringnut in der Getriebewelle 153 eingreift. Radial außen ist an den Lagerinnenring 225 mit Hilfe einer Schraube 230 ein Haltering 231 befestigt, durch den der Verschlussring 229 in die Ringnut der Getriebewelle 153 gedrückt wird.

Die Getriebehohlwelle 153 ist vorzugsweise direkt in einem (nicht dargestellten) Getriebegehäuse gelagert. Für die axiale Kupplungsabstützung kann es deshalb vorteilhaft sein, die Doppelkupplung auf der Hohlwelle 153 zu fixieren. Dadurch wird ein geringeres Axialspiel gewährleistet.

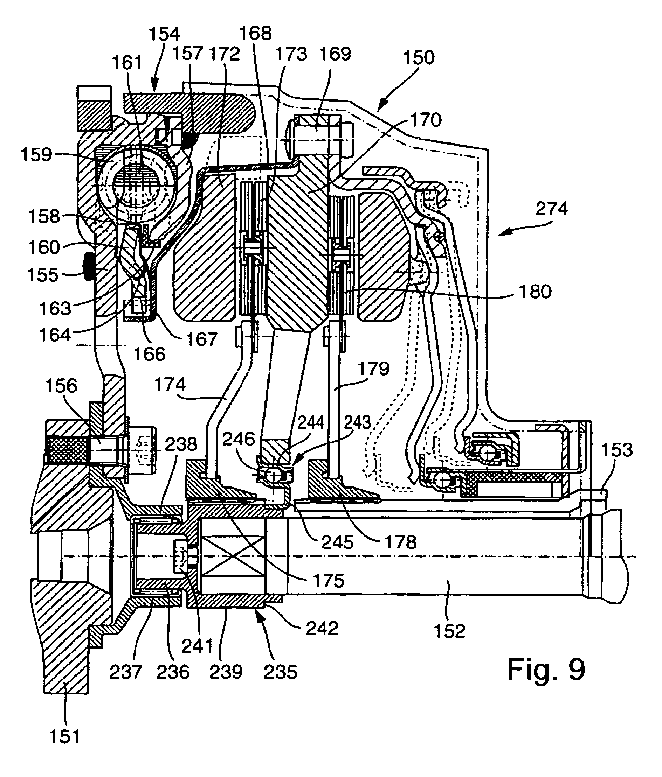

In Figur 9 ist ein ähnliches Ausführungsbeispiel wie in den Figuren 6 und 7 dargestellt. Zur Bezeichnung gleicher Teile werden die gleichen Bezugszeichen verwendet. Um Wiederholungen zu vermeiden, wird auf die vorangegangene Beschreibung der Figuren 6 und 7 verwiesen. Im Folgenden wird nur auf die Unterschiede zwischen den Ausführungsbeispielen eingegangen.

Bei dem in Figur 9 dargestellten Ausführungsbeispiel ist das Kupplungsgehäuseteil 168 radial weiter nach innen gezogen als bei den vorangegangenen Ausführungsbeispielen. Die Innenverzahnung 166 des Ausgangsteils 160 des Drehschwingungsdämpfers 154 sowie die Außenverzahnung 167 des Kupplungsgehäuseteils 168 sind im Bereich des Innendurchmessers der Reibbeläge 173, 180 der Doppelkupplung 150 angeordnet.

Außerdem ist bei dem in Figur 9 dargestellten Ausführungsbeispiel das Nabenteil 175 nicht direkt auf der Getriebevollwelle 152, sondern auf einem Nabenlagerteil 235 gelagert. Das Nabenlagerteil 235 hat im Wesentlichen die Gestalt eines Kreiszylindermantelabschnitts, der den gleichen Außendurchmesser wie die Getriebehohlwelle 153 aufweist. An dem antriebsseitigen Ende des Nabenlagerteils 235 ist eine Lagerhülse 236 vorgesehen, die einen geringeren Außendurchmesser als das Nabenlagerteil 235 aufweist. Die Lagerhülse 236 ist mit Hilfe eines Nadellagers 237, das auch als Pilotlager bezeichnet wird, in einem Haltekörper 238 drehbar gelagert, der mit Hilfe der Schrauben 156 an der Kurbelwelle 151 befestigt ist.

Der Kreiszylindermantelabschnitt des Nabenlagerteils 235 wird auch als Befestigungsabschnitt 239 bezeichnet. Der Befestigungsabschnitt 239 des Nabenlagerteils 235 ist radial außen drehfest mit dem Nabenteil 175 der ersten Kupplungsscheibe 174 verbunden. Das Nabenlagerteil 235 ist mit Hilfe einer Schraube 241 an dem antriebsseitigen Ende der Getriebevollwelle 152 befestigt. Der Befestigungsabschnitt 239 des Nabenlagerteils 235 weist an seinem getriebeseitigen Ende einen Absatz 242 auf. Durch den Absatz 242 wird eine Lagereinrichtung 243 für die Zwischendruckplatte 170 in axialer Richtung an der Getriebevollwelle 152 fixiert. Die Lagereinrichtung 243 umfasst einen Lageraußenring 244, der radial innen an der Zwischendruckplatte 170 befestigt ist. Außerdem umfasst die Lagereinrichtung 243 einen Lagerinnenring, der radial außen auf das getriebeseitige Ende des Nabenlagerteils 235 montiert ist. Der Lagerinnenring 245 stützt sich in axialer Richtung an dem Absatz 242 ab. Zwischen dem Lagerinnenring 245 und dem Lageraußenring 244 sind Wälzkörper 246 angeordnet.

Die Lagereinrichtung 243 kann auf das Nabenlagerteil 235 vormontiert und somit axial fixiert werden. Beim Montieren der Doppelkupplung 150 in eine Kupplungsglocke 247 wird das Nabenlagerteil 235 auf das antriebsseitige Ende der Getriebevollwelle 152 aufgeschoben. Die Schraube 241 zur axialen Fixierung des Nabenlagerteils 235 an der Getriebevollwelle 152 ist bei der Montage gut zu erreichen. Die axiale Abstützung der Kupplungskraft wird über den Absatz 242 an dem Nabenlagerteil 235 erreicht.

Durch die drehfeste Verbindung des Nabenteils 175 mit dem Nabenlagerteil 235 wird über dieses Teil ebenfalls die Momentenübertragung zwischen der Kupplungsscheibe 174 und der Getriebevollwelle 152 erreicht. Besonders vorteilhaft ist dabei, dass die beiden Kupplungsscheiben 174, 179 aufgrund des Außendurchmessers des Befestigungsabschnitts 239 die gleiche Nabengeometrie haben können.

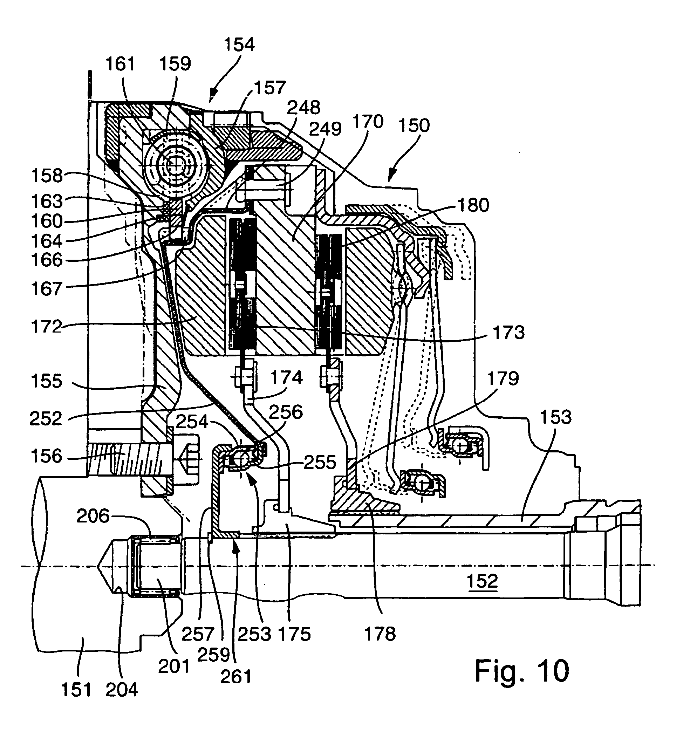

In Figur 10 ist ein ähnliches Ausführungsbeispiel wie in den Figuren 6 und 7 dargestellt. Zur Bezeichnung gleicher Teile werden die gleichen Bezugszeichen verwendet. Um Wiederholungen zur vermeiden, wird auf die vorangegangene Beschreibung der Figuren 6 und 7 verwiesen. Im Folgenden wird nur auf die Unterschiede zwischen den einzelnen Ausführungsbeispielen eingegangen.

Bei dem in Figur 10 dargestellten Ausführungsbeispiel ist an der Zwischendruckplatte 170 ein Kupplungsgehäuseteil 248 befestigt, das sich radial weiter nach innen erstreckt als bei den vorangegangenen Ausführungsbeispielen. Radial außen ist das Kupplungsgehäuseteil 248 mit Hilfe von Nietverbindungen 249 an der Zwischendruckplatte 270 befestigt. Im Bereich der Druckplatte 172 ist das Kupplungsgehäuseteil 248 durch die Außenverzahnung 167 drehfest mit der Innenverzahnung 166 des Dämpferausgangsteils 160 verbunden. Von dem Bereich des Kupplungsgehäuseteils 248 mit der Außenverzahnung 167 erstreckt sich ein Verbindungsteil 252 radial nach innen. Das radial innere Ende des Verbindungsteils 252 stützt sich über eine Lagereinrichtung 253 an der Getriebevollwelle 152 ab. Die Lagereinrichtung 253 umfasst einen Lageraußenring 254 und einen Lagerinnenring 255. Zwischen dem Lagerinnenring 255 und dem Lageraußenring 254 sind Wälzkörper 256 angeordnet. Der Lageraußenring 254 ist an einem Tragring 257 befestigt, der mit Hilfe eines Sicherungsrings 259, der auch als Verschlussring bezeichnet wird, zur Kurbelwelle 151 hin in axialer Richtung fixiert ist. Auf der dem Getriebe zugewandten Seite der Lagereinrichtung 255 ist das Nabenteil 175 der ersten Kupplungsscheibe 174 drehfest auf der Vollwelle 152 angebracht. Die Lagereinrichtung 253 ist auf einem Wellenabschnitt 261 der Getriebevollwelle 152 angeordnet, der zwischen dem Lagerzapfen 201 der Getriebewelle 152 und dem Nabenteil 175 angeordnet ist.

Bei dem in Figur 10 dargestellten Ausführungsbeispiel ist die Lagereinrichtung 253 antriebsseitig vor den Kupplungsscheibennaben 175, 178 angeordnet. Dadurch wird die Montage der axialen Fixierung einfacher. Allerdings hat diese Anordnung den Nachteil, dass die Lagereinrichtung 253 nicht optimal unter dem Schwerpunkt der Doppelkupplung 150 angeordnet ist.

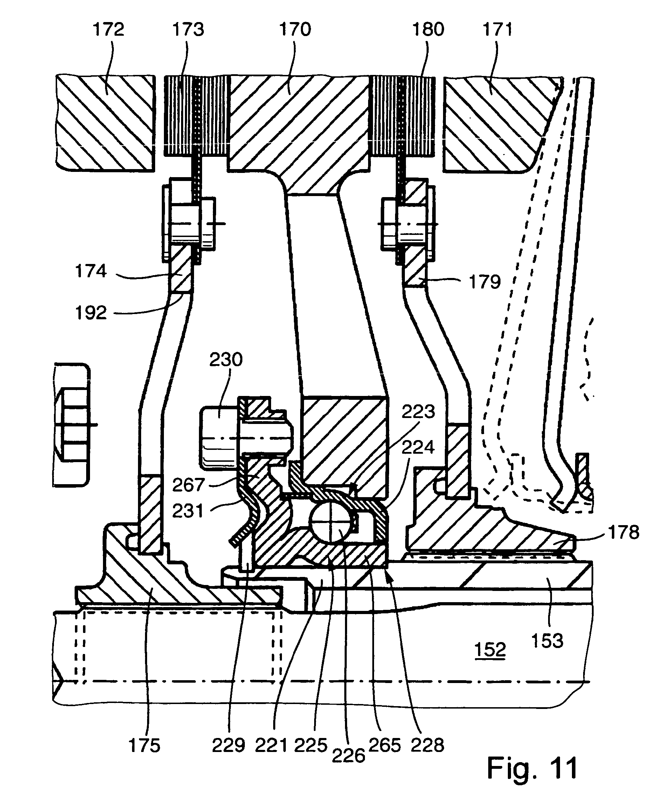

In Figur 11 ist der Ausschnitt mit der Lagereinrichtung 223 aus Figur 8 vergrößert dargestellt. In Figur 11 sieht man, dass der Lagerinnenring 225 einen im Wesentlichen kreiszylindermantelförmigen Tragabschnitt 265 aufweist, der zwischen dem Absatz 228 und dem Verschlussring 229 in axialer Richtung auf dem antriebsseitigen Ende der Getriebehohlwelle 153 fixiert ist. Von dem antriebsseitigen Ende des Tragabschnitts 265 erstreckt sich ein Befestigungsabschnitt 267 im Wesentlichen in radialer Richtung nach außen. An dem Befestigungsabschnitt 267, der einstückig mit dem Tragabschnitt 265 verbunden ist, ist mit Hilfe der Schraube 230 der Haltering 231 befestigt. In Figur 11 sieht man, dass die Lagereinrichtung 223 aus Blechteilen gebildet ist. Vor der Montage sind die Schrauben 230, die auch als Halteschrauben bezeichnet werden, gelockert. Dadurch kann sich der Haltering 231 in axialer Richtung bewegen und ermöglicht so, dass sich der vorgespannte, geschlitzte Verschlussring 229 aufweiten kann. Wenn die Doppelkupplung mit der Lagereinrichtung 223 auf die Getriebehohlwelle 153 aufgesteckt wird, dann können die Halteschrauben 230 durch die Öffnungen 192 in der ersten Kupplungsscheibe 174 angezogen werden. Der radial innen konische Haltering 231 drückt beim Anziehen der Halteschrauben 230 den Verschlussring 229 so zusammen, dass dieser sich in die Ringnut in der Getriebehohlwelle 153 fügt. Dadurch wird die Doppelkupplung in axialer Richtung fixiert. Im Falle einer Demontage müssen die Halteschrauben 230 gelöst werden. Dann öffnet sich der Verschlussring 129 aufgrund seiner Vorspannung. Je nach Bauart können zur axialen Fixierung der Lagereinrichtung 223 anstelle des Verschlussrings 229 auch Schnapphaken oder ein Bajonettring verwendet werden. Dabei muss allerdings darauf geachtet werden, dass die entsprechenden Montagestellen, zum Beispiel durch die Öffnungen 192, bei der Montage von außen zugänglich sind.

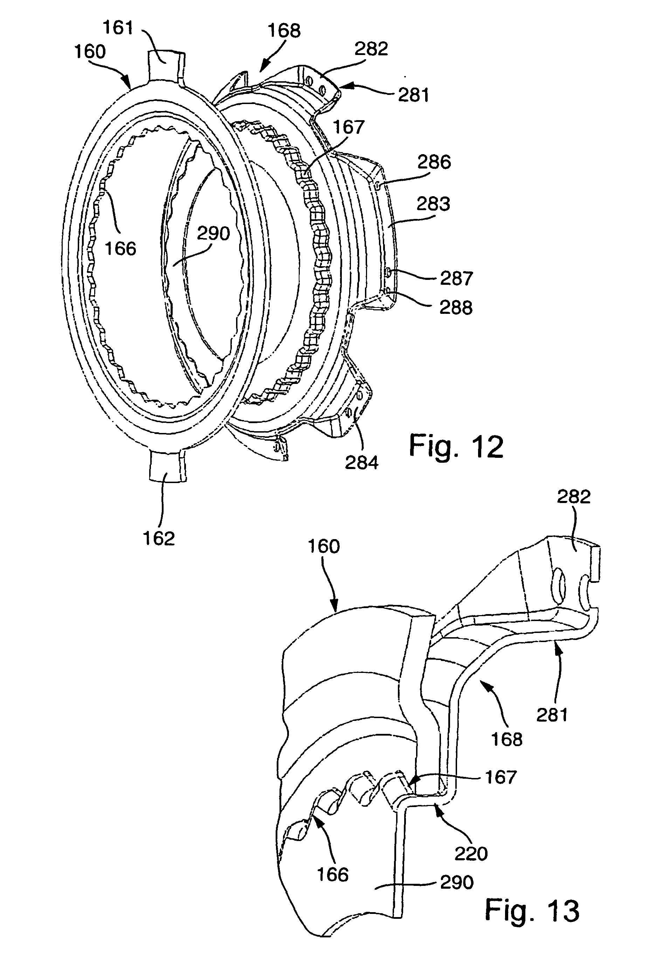

In Figur 12 sind ein Dämpferausgangsteil 160 mit einer Innenverzahnung 166 und ein Kupplungsgehäuseteil 168 mit einer Außenverzahnung 167, wie bei den Drehmomentübertragungseinrichtungen der Figuren 6 und 7, in Alleinstellung perspektivisch dargestellt. Das Dämpferausgangsteil 160, das auch als Kupplungsflansch bezeichnet wird, ist als Blechteil ausgeführt. Radial außen sind an dem Dämpferausgangsteil 160 zwei Arme oder Finger 161, 162 diametral entgegengesetzt angeordnet. Die Innenverzahnung 166 und die Außenverzahnung 167 sind mit Fasen und Rundungen ausgestattet, die als Montagehilfen dienen. Durch eine hohe Zähnezahl und gleichen Zahnformen über dem gesamten Umfang wird ein leichtes Finden der Steckverzahnung während der Montage erreicht. Um an der Kupplungsseite des Flansches viel Bauraum für die Kupplung freizuhalten, ist der Zweimassenschwungradflansch 160 axial und radial schmal ausgeführt.

Das Kupplungsgehäuseteil 168 weist getriebeseitig einen Flanschbereich 281 auf, der mehrere Füße 282, 283, 284 aufweist. In den Füßen sind jeweils mehrere Durchgangslöcher 286, 287, 288 vorgesehen, die zum Durchführen von Befestigungsmitteln dienen. Radial innen weist das Kupplungsgehäuseteil 168 einen Versteifungsrand 290 auf. Der Versteifungsrad 290 dient dazu, eine unerwünschte Deformation der Außenverzahnung 167 gering zu halten.

In Figur 13 ist ein Ausschnitt aus Figur 12 vergrößert dargestellt, wobei sich die Innenverzahnung 166 des Dämpferausgangsteils 160 mit der Außenverzahnung 167 des Kupplungsgehäuseteils 168 in Eingriff befindet. Wie man in Figur 13 sieht, kann das Kupplungsgehäuseteil 168 in axialer Richtung mit seiner Außenverzahnung in das Dämpfungseingangsteil 160 eingeführt werden.

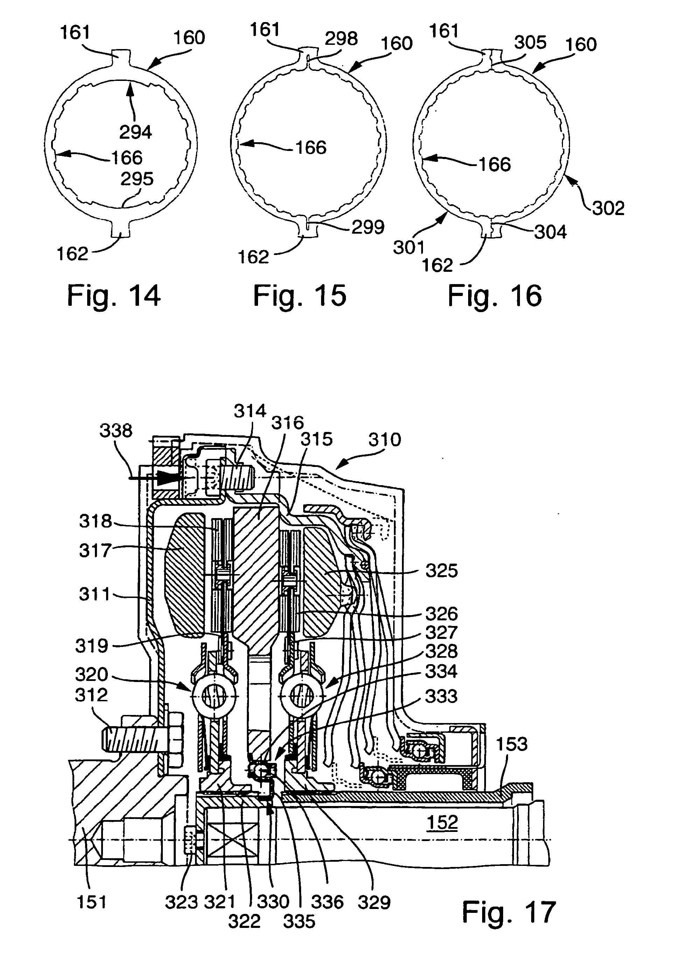

In den Figuren 14 bis 16 sind verschiedene Ausführungsbeispiele des Dämpferausgangsteils 160 in der Draufsicht dargestellt. Allen Ausführungsbeispielen ist gemeinsam, dass jeweils zwei Arme oder Finger 161, 162 diametral gegenüberliegend außen von dem Dämpferausgangsteil 160 abstehen. Außerdem ist das Dämpferausgangsteil 160 in allen drei Ausführungsbeispielen relativ schlank ausgeführt. Bei einer Krafteinleitung durch die Bogenfedern des Zweimassenschwungrads besteht die Tendenz zum Ausbeulen in radialer Richtung. Durch das Aufnehmen des Dämpferausgangsteils 160 auf dem steiferen Kupplungsgehäuseteil 168 (siehe Figur 12), das auch als Innenteil bezeichnet wird, wird die Größe der Deformation auf ein für die Verzahnung verträgliches Maß gebracht.

Bei dem in Figur 14 dargestellten Ausführungsbeispiel ist die Verzahnung 166 nicht durchgehend ausgebildet, sondern es sind auch Bereiche 294, 295 ohne Verzahnung vorgesehen. Durch die Bereiche 294, 295 ohne Verzahnung kann das Deformationsverhalten des Dämpferausgangsteils 160 weiter verbessert werden.

Bei dem in Figur 15 dargestellten Ausführungsbeispiel sind im Bereich der Arme 161, 162 radial innen Schlitze 298, 299 in dem Dämpferausgangsteil 160 angebracht. Die Schlitze 298, 299 erstrecken sich in radialer Richtung, sind aber nicht durchgehend ausgebildet. Durch die Schlitze 298, 299 kann das Dämpferausgangsteil 160 elastisch ausgebildet werden. Dadurch wird ohne die Verwendung zusätzlicher Teile eine vorgespannte Variante der Steckverzahnung ermöglicht. Dadurch kann der Verschleiß verringert und Geräuschprobleme vermieden werden.

In Figur 16 ist ein Dämpferausgangsteil 160 dargestellt, das aus zwei Hälften 301, 302 gebildet ist, die an Verbindungsstellen 304, 305 elastisch miteinander verbunden sind. Dadurch kann der Kraftfluss in dem Dämpferausgangsteil 160 verbessert werden. Außerdem können Deformationen im Betrieb des Dämpferausgangsteils 160 reduziert werden. Die mehrteilige Ausführung des Zweimassenschwungrads ermöglicht außerdem eine besonders wirtschaftliche Herstellung. Wenn zum Beispiel zwei umfangssymmetrische Hälften 301, 302 kombiniert werden, lassen sich die Teile mit geringerem Stanzabfall aus Blech produzieren.

In Figur 17 ist ein Ausführungsbeispiel gezeigt, bei dem eine Doppelkupplung 310 über ein Mitnehmerteil 311 mit einer Kurbelwelle 151 gekoppelt ist. Radial innen ist das Mitnehmerteil 311 durch Schrauben 312 an der Kurbelwelle 151 befestigt. Radial außen ist das Mitnehmerteil 311 durch Schrauben 314 an einem Kupplungsgehäuseteil 315 befestigt. An dem Kupplungsgehäuseteil 315 wiederum ist (nicht dargestellt) eine Zwischendruckplatte 316 befestigt. Antriebsseitig sind zwischen der Zwischendruckplatte 316 und einer Druckplatte 317 Reibbeläge 318 einer ersten Kupplungsscheibe 319 einklemmbar. Die erste Kupplungsscheibe 319 ist über eine Schwingungsdämpfungseinrichtung 320 mit einem Nabenteil 321 der ersten Kupplungsscheibe 319 gekoppelt. Das Nabenteil 321 ist drehfest mit einem Nabenlagerteil 322 verbunden, das mit Hilfe einer Schraube 323 an einer Getriebewelle 152 befestigt ist, die als Vollwelle ausgebildet ist.

Getriebeseitig sind zwischen der Zwischendruckplatte 316 und der Druckplatte 325 Reibbeläge 326 einer zweiten Kupplungsscheibe 327 einklemmbar. Die zweite Kupplungsscheibe 327 ist durch eine weitere Schwingungsdämpfungseinrichtung 328 mit einem Nabenteil 329 gekoppelt, das drehfest auf das antriebsseitige Ende einer hohlen Getriebewelle 153 montiert ist.

Das Nabenlagerteil 322 weist an seinem getriebeseitigen Ende einen umlaufenden Absatz 330 auf, an dem sich eine Lagereinrichtung 333 für die Zwischendruckplatte 316 in axialer Richtung abstützt. Die Lagereinrichtung 333 umfasst einen Lageraußenring 334, der radial innen an der Zwischendruckplatte 316 befestigt ist. Außerdem umfasst die Lagereinrichtung 133 einen Lagerinnenring 135, der radial außen auf das Nabenlagerteil 322 montiert ist. Zwischen dem Lagerinnenring 335 und dem Lageraußenring 334 sind Wälzkörper 336 angeordnet.

Bei dem in Figur 17 dargestellten Ausführungsbeispiel wird, im Unterschied zu den vorangegangenen Ausführungsbeispielen kein Zweimassenschwungrad verwendet. Aufgrund der erheblichen Momentenbelastung ist bei diesem Ausführungsbeispiel die Verbindung zwischen der Doppelkupplung 310 und der Kurbelwelle 151 nicht als Steckverbindung ausgeführt. Durch einen Pfeil 338 ist der Zugang zu den Schrauben 314 bei der Montage angedeutet. Die Anbindung der Doppelkupplung 310 an die Kurbelwelle 151 erfolgt bei dem in Figur 17 dargestellten Ausführungsbeispiel über die Mitnehmerscheibe 311.

Bei den in den Figuren 6 bis 16 dargestellten Ausführungsbeispielen werden die Betätigungskräfte der Doppelkupplung durch die Lagereinrichtung an einer der Getriebeeingangswellen abgestützt. Gleichzeitig dient die Lagereinrichtung in vorteilhafter Weise der radialen Kupplungsabstützung. Die Kupplung kann in der Kupplungsglocke vormontiert werden. Das Zweimassenschwungrad kann auf der Kurbelwelle vormontiert werden. Die Verbindung zur Kupplung wird während der Montage mittels einer Steckverzahnung hergestellt. Die Steckverzahnung bietet eine axiale Schwingentkopplung der Kupplung von den Kurbelwellenschwingungen. Der notwendige radiale Ausgleich der Kupplung zur Kurbelwelle erfolgt durch die Beweglichkeit des Dämpferausgangsteils im Zweimassenschwungrad. Das innen verzahnte Dämpferausgangsteil wird durch das außen verzahnte Kupplungsgehäuseteil zentriert und kann an seinen Kontaktstellen zu den Teilen des Zweimassenschwungrads einen Ausgleich ausführen.

### Bezugszeichenliste

- 1.: Antriebsstrang
- 2.: -
- 3.: Antriebseinheit
- 4.: Kurbelwelle
- 5.: Getriebe
- 6.: Doppelkupplung
- 7.: -
- 8.: Drehschwingungsdämpfungseinrichtung
- 9.: Schraubverbindung
- 10.: Schraubverbindung
- 11.: Eingangsteil von 8
- 12.: Anlasserzahnkranz
- 13.: -
- 14.: -
- 15.: -
- 16.: Federeinrichtung
- 17.: -
- 18.: Ausgangsteil
- 19.: Gleit-/Reibring
- 20.: Tellerfeder
- 21.: -
- 22.: Kupplungsgehäuseteil
- 23.: -
- 24.: Nietverbindung
- 25.: -
- 26.: Zwischendruckplatte
- 27.: -
- 28.: Druckplatte
- 29.: Reibbeläge
- 30.: -
- 31.: Kupplungsscheibe
- 32.: -
- 33.: Nabenteil
- 34.: -
- 35.: erste Getriebeeingangswelle => Vollwelle
- 36.: zweite Getriebeeingangswelle => Hohlwelle
- 37.: Wälzlager
- 38.: Nabenteil
- 39.: Druckplatte
- 40.: Reibbeläge
- 41.: -
- 42.: zweite Kupplungsscheibe
- 43.: Nabenteil
- 44.: Kupplungsgehäuse
- 45.: -
- 46.: Betätigungseinrichtung
- 47.: Betätigungseinrichtung
- 48.: Betätigungshebel
- 49.: Betätigungshebel
- 50.: -
- 51.: innerer Flanschring
- 52.: äußerer Flanschring
- 53.: -
- 54.: -
- 55.: Sicherungsring
- 56.: -
- 57.: -
- 58.: -
- 59.: -
- 60.: -
- 61.: Antriebsstrang
- 62.: -
- 63.: Antriebseinheit
- 64.: Kurbelwelle
- 65.: Getriebe
- 66.: Doppelkupplung
- 67.: -
- 68.: Schraubverbindung
- 69.: -
- 70.: Flex Plate
- 71.: Anlasserzahnkranz
- 72.: Flügel
- 73.: Trägerblech
- 74.: -
- 75.: Schraubverbindung
- 76.: -
- 77.: -
- 78.: Zwischendruckplatte
- 79.: Kupplungsgehäuseteil
- 80.: -
- 81.: -
- 82.: -
- 83.: -
- 84.: -
- 85.: -
- 86.: -
- 87.: -
- 88.: Druckplatte
- 89.: Reibbeläge
- 90.: -
- 91.: Kupplungsscheibe
- 92.: Drehschwingungsdämpfungseinrichtung
- 93.: Nabenteil
- 94.: -
- 95.: erste Getriebeeingangswelle => Vollwelle
- 96.: zweite Getriebeeingangswelle => Hohlwelle
- 97.: Nadellager
- 98.: rohrförmiges Nabenteil => zwischen 95 und 96
- 99.: Nietverbindung
- 100.: Druckplatte
- 101: Reibbeläge
- 102.: Kupplungsscheibe
- 103.: Drehschwingungsdämpfungseinrichtung
- 104.: Nabenteil
- 105.: -
- 106.: Betätigungseinrichtung
- 107.: Betätigungseinrichtung
- 108.: Betätigungshebel
- 109.: Betätigungshebel
- 110.: -
- 111.: -
- 112.: -
- 113.: -
- 114.: -
- 115.: -
- 116.: -
- 117.: Nadellager

- 140.: Kupplungsaggregat

- 150.: Doppelkupplung
- 151.: Kurbelwelle
- 152.: Getriebeausgangswelle
- 153.: Getriebeausgangswelle
- 154.: Schwingungsdämpfer
- 155.: Eingangsteil
- 156.: Schrauben
- 157.: Bauteil
- 158.: Kammer
- 159.: Energiespeicher
- 160.: Ausgangsteil
- 161.: Arme oder Finger
- 162.: -
- 163.: Reib-/Gleitring
- 164.: Tellerfeder
- 165.: -
- 166.: Innenverzahnung
- 167.: Außenverzahnung
- 168.: Kupplungsgehäuseteil
- 169.: Nietverbindungen
- 170.: Zwischendruckplatte
- 171.: Druckplatte
- 172.: Druckplatte
- 173.: Reibbeläge
- 174.: erste Kupplungsscheibe
- 175.: Nabenteil => 152, 153
- 176..: -
- 177.: -
- 178.: Nabenteil
- 179.: zweite Kupplungsscheibe
- 180.: Reibbeläge
- 181.: Wellenabschnitt
- 182.: -
- 183.: Lagereinrichtung
- 184.: Lageraußenring
- 185.: Lagerinnenring
- 186.: Wälzkörper
- 187.: -
- 188.: Sicherungsring
- 189.: Sicherungsring
- 190.: Schraube
- 191.: Haltering
- 192.: Öffnung in 174
- 193.: -
- 194.: Kupplungsgehäuse
- 195.: -
- 196.: Betätigungseinrichtung
- 197.: Betätigungseinrichtung
- 198.: Betätigungshebel
- 199.: Betätigungshebel
- 200.: -
- 201.: Lagerzapfen
- 202.: -
- 203.: -
- 204.: Sackbohrung
- 205.: -
- 206.: Nadellager (Pilotlager)

- 220.: axiale Steckverbindung
- 221.: Wellenabschnitt
- 222.: -
- 223.: Lagereinrichtung
- 224.: Lageraußenring
- 225.: Lagerinnenring
- 226.: Wälzkörper
- 227.: -
- 228.: Absatz
- 229.: Sicherungsring
- 230.: Schraube
- 231.: Haltering
- 232.: -
- 233.: -
- 234.: -
- 235.: Nabenlagerteil
- 236.: Lagerhülse
- 237.: Nadellager
- 238.: Haltekörper
- 239.: Befestigungsabschnitt
- 241.: Schraube
- 242.: Absatz
- 243.: Lagereinrichtung
- 244.: Lageraußenring
- 245.: Lagerinnenring
- 246.: Wälzkörper
- 247.: Kupplungsglocke
- 248.: Kupplungsgehäuseteil
- 249.: Nietverbindung
- 250.: -
- 251.: -
- 252.: Verbindungsteil
- 253.: Lagereinrichtung
- 254.: Lageraußenring
- 255.: Lagerinnenring
- 256.: Wälzkörper
- 257.: Tragring
- 258.: -
- 259.: Sicherungseinrichtung
- 260.: -
- 261.: Wellenabschnitt
- 262.: -
- 263.: -
- 264.: -
- 265.: Tragabschnitt
- 266.: -
- 267: Befestigungsabschnitt
- 268.: -
- 269.: -
- 270.: -

- 281.: Flanschbereich
- 282.: Fuß
- 283.: Fuß
- 284.: Fuß
- 285.: -
- 286.: Durchgangsloch
- 287.: Durchgangsloch
- 288.: Durchgangsloch
- 289.: -
- 290.: Versteifungsrand
- 291.: -
- 292.: -
- 293.: -
- 294.: Bereiche
- 295.: Bereiche
- 296.: -
- 297.: -
- 298.: Schlitz
- 299.: Schlitz
- 300.: -
- 301.: Hälfte
- 302.: Hälfte
- 303.: -
- 304.: Verbindungsstelle
- 305.: Verbindungsstelle
- 306.: -
- 307.: -
- 308.: -
- 309.: -
- 310.: Doppelkupplung
- 311.: Mitnehmerteil
- 312.: Schrauben
- 313.: -
- 314.: Schrauben
- 315.: Kupplungsgehäuse
- 316.: Zwischendruckplatte
- 317.: Druckplatte
- 318.: Reibbeläge
- 319.: Kupplungsscheibe
- 320.: Schwingungsdämpfungseinrichtung
- 321.: Nabenteil
- 322.: Nabenlagerteil
- 323.: Schraube an 152
- 324.: -
- 325.: Druckplatte
- 326.: Reibbeläge
- 327.: Kupplungsscheibe
- 328.: Schwingungsdämpfungseinrichtung
- 329.: Nabenteil an 153
- 330.: Absatz
- 331.: -
- 332.: -
- 333.: Lagereinrichtung
- 334.: Lageraußenring
- 335.: Lagerinnenring
- 336.: Wälzkörper
- 337.: -
- 338.: Pfeil
- 339.: -
- 340.: -

## Patentansprüche

1. Drehmomentübertragungseinrichtung im Antriebsstrang (1;61) eines Kraftfahrzeugs mit einer Doppelkupplung zur Drehmomentübertragung zwischen einer Antriebseinheit (3;63), insbesondere einer Brennkraftmaschine, mit einer Abtriebswelle (4;64;151), insbesondere einer Kurbelwelle, und einem Getriebe (5;65) mit mindestens zwei Getriebeeingangswellen (35,36;95,96;152,153)), die jeweils mit einer Reibbeläge aufweisenden Kupplungsscheibe (31,42;91,102;174,178) einer der Kupplungen drehfest verbunden sind, wobei zwischen den Reibbelägen der einen Kupplungsscheibe und den Reibbelägen der anderen Kupplungsscheibe eine Zwischendruckplatte (26;78;170) angeordnet ist, die drehfest mit der Abtriebswelle der Antriebseinheit verbunden ist, wobei die Reibbeläge der Kupplungsscheiben (31,42;91,102;174,178) zwischen der Zwischendruckplatte (26;78;170) und Druckplatten (28,39;88,100;171,172) angeordnet sind, die mit Hilfe einer Betätigungseinrichtung (46,47;106,107;196,197), bezogen auf die Getriebeeingangswellen, in axialer Richtung relativ zu der Zwischendruckplatte (26;78;170) bewegbar sind, um die Reibbeläge zwischen der Zwischendruckplatte und den Druckplatten einzuklemmen, **dadurch gekennzeichnet, dass** die Doppelkupplung nur mittels der Zwischendruckplatte (26;78;170) gelagert ist, indem diese zumindest an einer der Getriebeeingangswellen (35,36;95,96;152,153) in axialer Richtung über eine Lagerung abgestützt ist, wodurch die in axialer Richtung wirkenden Betätigungskräfte der Doppelkupplung abgestützt werden.

2. Drehmomentübertragungseinrichtung nach Anspruch 1, **dadurch gekennzeichnet, dass** die Zwischendruckplatte (26;170) mit Hilfe einer Lagereinrichtung (223), insbesondere eines Radiallagers (37), an einer der Getriebeeingangswellen, insbesondere an einer innen hohlen Getriebeeingangswelle (36;153) gelagert ist, in der eine weitere Getriebeeingangswelle (35;152) drehbar angeordnet ist.

3. Drehmomentübertragungseinrichtung nach Anspruch 2, **dadurch gekennzeichnet, dass** an einer der Getriebeeingangswellen, insbesondere der weiteren Getriebeeingangswelle (35), eine der Kupplungsscheiben (31) lösbar, das heißt zerstörungsfrei trennbar, befestigt ist.

4. Drehmomentübertragungseinrichtung nach Anspruch 3, **dadurch gekennzeichnet, dass** die an einer der Getriebeeingangswellen, insbesondere der weiteren Getriebeeingangswelle (35), befestigte Kupplungsscheibe (31) zweigeteilt ausgeführt ist.

5. Drehmomentübertragungseinrichtung nach Anspruch 4, **dadurch gekennzeichnet, dass** die an einer der Getriebeeingangswellen, insbesondere der weiteren Getriebeeingangswelle (35), befestigte Kupplungsscheibe (31) ein Nabenteil (33) aufweist, von dem ein innerer Flanschring (51) ausgeht, der lösbar, das heißt zerstörungsfrei trennbar, an einem äußeren Flanschring (52) befestigt ist, an dem radial außen Reibbeläge (29) angebracht sind.

6. Drehmomentübertragungseinrichtung nach Anspruch 5, **dadurch gekennzeichnet, dass** die beiden Flanschringe (51,52) durch mindestens eine Schraubverbindung miteinander verbunden sind.

7. Drehmomentübertragungseinrichtung nach einem der vorhergehenden Ansprüche, **dadurch gekennzeichnet, dass** eine der Getriebeeingangswellen als Hohlwelle (96) ausgebildet ist, in der die weitere Getriebeeingangswelle (95) drehbar angeordnet ist, wobei zwischen den beiden Getriebeeingangswellen ein im Wesentlichen rohrförmiges Nabenteil (98) mit einem antriebsseitigen und einem getriebeseitigen Ende drehbar angeordnet ist, wobei an dem antriebsseitigen Ende des Nabenteils (98) die Zwischendruckplatte (78) befestigt ist.

8. Drehmomentübertragungseinrichtung nach Anspruch 7, **dadurch gekennzeichnet, dass** das Nabenteil (98) im Bereich seines getriebeseitigen Endes innerhalb der Hohlwelle (96) an der Hohlwelle (96) gelagert ist.

9. Drehmomentübertragungseinrichtung nach Anspruch 7, **dadurch gekennzeichnet, dass** das Nabenteil (98) im Bereich seines getriebeseitigen Endes innerhalb der Hohlwelle (96) an der weiteren Getriebeeingangswelle (95) gelagert ist.

10. Drehmomentübertragungseinrichtung nach einem der vorhergehenden Ansprüche, **dadurch gekennzeichnet, dass** die Doppelkupplung (150;310) in ein Kupplungsgehäuse vormontierbar ist.

11. Drehmomentübertragungseinrichtung nach Anspruch 10, **dadurch gekennzeichnet, dass** die Lagerstelle der vormontierten Doppelkupplung (150;310) im Bereich oder in der Nähe des Schwerpunkts der Kupplung angeordnet ist.

12. Drehmomentübertragungseinrichtung nach einem der Ansprüche 1 bis 11, **dadurch gekennzeichnet, dass** eine der Getriebeeingangswellen (153) als Hohlwelle ausgebildet ist, in der die weitere Getriebeeingangswelle (152) drehbar angeordnet ist, wobei die Zwischendruckplatte (170) mit Hilfe einer Lagereinrichtung (183;223;253) direkt auf einer der Getriebeeingangswellen (152,153), insbesondere auf der weiteren Getriebeeingangswelle (152), gelagert ist.

13. Drehmomentübertragungseinrichtung nach einem der Ansprüche 1 bis 11, **dadurch gekennzeichnet, dass** eine der Getriebeeingangswellen als Hohlwelle (153) ausgebildet ist, in der die weitere Getriebeeingangswelle drehbar angeordnet ist, wobei die Zwischendruckplatte (170;316) mit Hilfe einer Lagereinrichtung (243;333) auf einem Nabenlagerteil (225;322) gelagert ist, das lösbar, das heißt zerstörungsfrei trennbar, an dem antriebsseitigen Ende der weiteren Getriebeeingangswelle (152) befestigt ist.

14. Drehmomentübertragungseinrichtung nach Anspruch 13, **dadurch gekennzeichnet, dass** eine der Kupplungsscheiben (174;319) drehfest mit dem Nabenlagerteil (235;322) verbunden ist.

15. Drehmomentübertragungseinrichtung nach einem der Ansprüche 1 bis 14, **dadurch gekennzeichnet, dass** die Lagereinrichtung (183;223;253) einen Lageraußenring (184), der radial innen an der Zwischendruckplatte (170) befestigt ist, und/oder einen Lagerinnenring (185) umfasst, der radial außen an der zugehörigen Getriebeeingangswelle (152,153) befestigt ist.

16. Drehmomentübertragungseinrichtung nach Anspruch 15, **dadurch gekennzeichnet, dass** der Lagerinnenring (185) einen Tragabschnitt (265) aufweist, der radial innen so auf eine der Getriebeeingangswellen (152,153) aufgeschoben ist, dass das getriebeseitige Ende des Tragabschnitts (265) an einem Absatz (228) anliegt, der an der zugehörigen Getriebeeingangswelle (153) ausgebildet ist.

17. Drehmomentübertragungseinrichtung nach Anspruch 16, **dadurch gekennzeichnet, dass** von dem antriebsseitigen Ende des Tragabschnitts (265) ein Befestigungsabschnitt (267) ausgeht, an dem ein Haltering (231) lösbar, das heißt zerstörungsfrei trennbar, befestigt ist.

18. Drehmomentübertragungseinrichtung nach Anspruch 17, **dadurch gekennzeichnet, dass** der Haltering (231) mit Hilfe mindestens einer Schraubverbindung (230) an dem Befestigungsabschnitt (267) des Lagerinnenrings (225) befestigt ist.

19. Drehmomentübertragungseinrichtung nach Anspruch 18, **dadurch gekennzeichnet, dass** der Haltering radial innen einen Fixierabschnitt aufweist, der in Abhängigkeit von dem Verschraubungszustand der Schraubverbindung (230) so eine Schließkraft auf einen Verschlussring (229) ausübt, dass der Verschlussring (229) in eine Ringnut eingreift, die in der zugehörigen Getriebeeingangswelle (153) vorgesehen ist.

20. Drehmomentübertragungseinrichtung nach Anspruch 19, **dadurch gekennzeichnet, dass** der Verschlussring (229) geschlitzt ausgebildet und so vorgespannt ist, dass er auf die zugehörige Getriebeeingangswelle (153) aufgesteckt werden kann.

21. Drehmomentübertragungseinrichtung nach einem der Ansprüche 15 bis 20, **dadurch gekennzeichnet, dass** der Lageraußenring (184), der Lagerinnenring (185), der Haltering (231) und/oder der Verschlussring (229) aus Blech gebildet sind.

22. Drehmomentübertragungseinrichtung nach einem der vorhergehenden Ansprüche, **dadurch gekennzeichnet, dass** zwischen die Abtriebswelle (151) der Antriebseinheit und die Doppelkupplung (150) eine Drehschwingungsdämpfungseinrichtung (154), insbesondere ein Zweimassenschwungrad, geschaltet ist, die ein Dämpfereingangsteil (155), das drehfest mit der Abtriebswelle (151) der Antriebseinheit verbunden ist, und ein Dämpferausgangsteil (160) umfasst, das lösbar, das heißt zerstörungsfrei trennbar, mit einem Doppelkupplungsgehäuseteil (168) verbunden ist, an dem die Zwischendruckplatte (170) befestigt ist.

23. Drehmomentübertragungseinrichtung nach Anspruch 22, **dadurch gekennzeichnet, dass** zwischen dem Doppelkupplungsgehäuseteil (22;168) und dem Dämpferausgangsteil (18;160) eine Federeinrichtung (20;164) vorgespannt ist, durch die das Dämpferausgangsteil (18;160) gegen eine Reib-/Gleiteinrichtung (19;163) gedrückt wird, die zwischen dem Dämpfereingangsteil (11;155) und dem Dämpferausgangsteil (18;160) angeordnet ist.

24. Drehmomentübertragungseinrichtung nach Anspruch 23, **dadurch gekennzeichnet, dass** das Dämpferausgangsteil (160) an seiner Innenseite radial innerhalb der Reib-/Gleiteinrichtung (163) eine Vertiefung zur Aufnahme eines Abschnitts des Doppelkupplungsgehäuseteils (168) aufweist.

25. Drehmomentübertragungseinrichtung nach einem der Ansprüche 22 bis 24, **dadurch gekennzeichnet, dass** das Doppelkupplungsgehäuseteil (168) aus Blech gebildet ist und einen Flanschbereich (281) aufweist, der zur Befestigung des Doppelkupplungsgehäuseteils (168) an der Zwischendruckplatte (170) dient.

26. Drehmomentübertragungseinrichtung nach Anspruch 25, **dadurch gekennzeichnet, dass** das Doppelkupplungsgehäuseteil (168) einen Außenverzahnungsbereich (167) aufweist, der einstückig mit dem Flanschbereich (281) und komplementär zu einer Innenverzahnung (166) ausgebildet ist, die radial innen an dem Dämpferausgangsteil (160) vorgesehen ist.

27. Drehmomentübertragungseinrichtung nach Anspruch 26, **dadurch gekennzeichnet, dass** der Außenverzahnungsbereich (127) des Doppelkupplungsgehäuseteils (168) in radialer Richtung zwischen dem Innendurchmesser und dem Außendurchmesser der Reibbeläge (173) der benachbarten Kupplungsscheibe (174) angeordnet ist.

28. Drehmomentübertragungseinrichtung nach Anspruch 26 oder 27, **dadurch gekennzeichnet, dass** radial innerhalb des Außenverzahnungsbereichs (167) ein Versteifungsrand (290) an dem Doppelkupplungsgehäuseteil (168) ausgebildet ist.

29. Drehmomentübertragungseinrichtung nach einem der Ansprüche 22 bis 28, **dadurch gekennzeichnet, dass** das Dämpferausgangsteil (160) im Wesentlichen die Gestalt einer aus Blech gebildeten Kreisringscheibe aufweist, an der radial innen eine Innenverzahnung (166) und radial außen mindestens ein Mitnehmerfinger (161,162) ausgebildet ist, der in eine Energiespeichereinrichtung der Drehschwingungsdämpfungseinrichtung (154) eingreift.

30. Drehmomentübertragungseinrichtung nach Anspruch 29, **dadurch gekennzeichnet, dass** an dem Dämpferausgangsteil (160) radial außen diametral entgegengesetzt zwei Mitnehmerfinger (161,162) ausgebildet sind.

31. Drehmomentübertragungseinrichtung nach Anspruch 30, **dadurch gekennzeichnet, dass** im Bereich der Mitnehmerfinger (161,162) in dem Dämpferausgangsteil (160) jeweils ein radial verlaufender Schlitz (298,299) ausgebildet ist.

32. Drehmomentübertragungseinrichtung nach einem der Ansprüche 1 bis 31, **dadurch gekennzeichnet, dass** zwischen Antriebseinheit (3) und Doppelkupplung (6) eine Schwingungsdämpfungseinrichtung (8) vorgesehen ist.

## Claims

1. Torque transmission device in the drivetrain (1; 61) of a motor vehicle, with a double clutch for transmitting torque between a drive unit (3; 63), in particular an internal combustion engine which has a drive shaft (4; 64; 151), in particular a crankshaft, and a transmission (5; 65) with at least two transmission input shafts (35, 36; 95, 96; 152, 153), which are each connected non-rotatably to a respective clutch disc (31, 42; 91, 102; 174, 178) of one of the clutches, which clutch disc (31, 42; 91, 102; 174, 178) has friction linings, an intermediate pressure plate (26; 78; 170) being arranged between the friction linings of the one clutch disc and the friction linings of the other clutch disc, which intermediate pressure plate (26; 78; 170) is connected non-rotatably to the output shaft of the drive unit, the friction linings of the clutch discs (31, 42; 91, 102; 174, 178) being arranged between the intermediate pressure plate (26; 78; 170) and pressure plates (28, 39; 88, 100; 171, 172) which are movable by means of an actuating device (46, 47; 106, 107; 196, 197), in an axial direction in relation to the transmission input shafts, relative to the intermediate pressure plate (26; 78; 170), in order to clamp the friction linings between the intermediate pressure plate and the pressure plates, **characterized in that** the double clutch is mounted only by means of the intermediate pressure plate (26; 78; 170), the latter being supported in the axial direction on at least one of the transmission input shafts (35, 36; 95, 96; 152, 153) by means of a bearing by which the actuating forces of the double clutch, acting in the axial direction, are supported.

2. Torque transmission device according to Claim 1, **characterized in that** the intermediate pressure plate (26; 170) is mounted by means of a bearing arrangement (223), in particular a radial bearing (37), on one of the transmission input shafts, in particular on an internally hollow transmission input shaft (36; 153) in which a further transmission input shaft (35; 152) is arranged rotatably.

3. Torque transmission device according to Claim 2, **characterized in that** one of the clutch discs (31) is fastened detachably, that is, removably in a non-destructive manner, to one of the transmission input shafts, in particular the further transmission input shaft (35).

4. Torque transmission device according to Claim 3, **characterized in that** the clutch disc (31) fastened to one of the transmission input shafts, in particular to the further transmission input shaft (35), has a two-part configuration.

5. Torque transmission device according to Claim 4, **characterized in that** the clutch disc (31) fastened to one of the transmission input shafts, in particular to the further transmission input shaft (35), has a hub part (33) from which extends an inner flanged ring (51) which is fastened detachably, that is, removably in a non-destructive manner, to an outer flanged ring (52), on the radially outer portion of which friction linings (29) are mounted.

6. Torque transmission device according to Claim 5, **characterized in that** the two flanged rings (51, 52) are connected to one another by at least one screw connection.

7. Torque transmission device according to any one of the preceding claims, **characterized in that** one of the transmission input shafts is configured as a hollow shaft (96) in which the further transmission input shaft (95) is arranged rotatably, a substantially tubular hub part (98) being arranged rotatably between the two transmission input shafts, which hub part (98) has a drive-side end and a transmission-side end, the intermediate pressure plate (78) being fastened to the drive-side end of the hub part (98).

8. Torque transmission device according to Claim 7, **characterized in that** the hub part (98), in the region of its transmission-side end, is mounted inside the hollow shaft (96) on the hollow shaft (96).

9. Torque transmission device according to Claim 7, **characterized in that** the hub part (98), in the region of its transmission-side end, is mounted inside the hollow shaft (96) on the further transmission input shaft (95).

10. Torque transmission device according to any one of the preceding claims, **characterized in that** the double clutch (150; 310) can be pre-installed in a clutch housing.

11. Torque transmission device according to Claim 10, **characterized in that** the bearing site of the pre-installed double clutch (150; 310) is arranged in the region or in the vicinity of the centre of gravity of the clutch.

12. Torque transmission device according to any one of Claims 1 to 11, **characterized in that** one of the transmission input shafts (153) is configured as a hollow shaft in which the further transmission input shaft (152) is arranged rotatably, the intermediate pressure plate (170) being mounted directly on one of the transmission input shafts (152, 153), in particular on the further transmission input shaft (152), by means of a bearing arrangement (183; 223; 253).

13. Torque transmission device according to any one of Claims 1 to 11, **characterized in that** one of the transmission input shafts is configured as a hollow shaft (153) in which the further transmission input shaft is arranged rotatably, the intermediate pressure plate (170; 316) being mounted by means of a bearing arrangement (243; 333) on a hub bearing part (225; 322) which is fastened detachably, that is, removably in a non-destructive manner, to the drive-side end of the further transmission input shaft (152).

14. Torque transmission device according to Claim 13, **characterized in that** one of the clutch discs (174; 319) is connected non-rotatably to the hub bearing part (235; 322).

15. Torque transmission device according to any one of Claims 1 to 14, **characterized in that** the bearing arrangement (183; 223; 253) includes an outer bearing race (184) which is fastened radially to the inside of the intermediate pressure plate (170), and/or includes an inner bearing race (185) which is fastened radially to the outside of the associated transmission input shaft (152, 153).

16. Torque transmission device according to Claim 15, **characterized in that** the inner bearing race (185) has a carrier section (265), the radially inner portion of which is slid on to one of the transmission input shafts (152, 153) such that the transmission-side end of the carrier section (265) bears against a shoulder (228) formed on the associated transmission input shaft (153).

17. Torque transmission device according to Claim 16, **characterized in that** a fastening section (267) to which a retaining ring (231) is fastened detachably, that is, removably in a non-destructive manner, extends from the drive-side end of the carrier section (265).

18. Torque transmission device according to Claim 17, **characterized in that** the retaining ring (231) is fastened to the fastening section (267) of the inner bearing race (225) by means of at least one screw connection (230).

19. Torque transmission device according to Claim 18, **characterized in that** the retaining ring has in its radially inner portion a fixing section which, in dependence on the state of tightening of the screw connection (230), exerts a closing force on a locking ring (229) such that the locking ring (229) engages in an annular groove which is provided in the associated transmission input shaft (153).

20. Torque transmission device according to Claim 19, **characterized in that** the locking ring (229) has a slotted configuration and is pretensioned such that it can be fitted to the associated transmission input shaft (153).

21. Torque transmission device according to any one of Claims 15 to 20, **characterized in that** the outer bearing race (184), the inner bearing race (185), the retaining ring (231) and/or the locking ring (229) are formed from sheet metal.

22. Torque transmission device according to any one of the preceding claims, **characterized in that** a torsional vibration damping device (154), in particular a dual-mass flywheel, is positioned between the output shaft (151) of the drive unit and the double clutch (150), which torsional vibration damping device (154) includes a damper input part (155) which is connected non-rotatably to the output shaft (151) of the drive unit, and includes a damper output part (160) which is connected detachably, that is, removably in a non-destructive manner, to a double clutch housing part (168) to which the intermediate pressure plate (170) is fastened.

23. Torque transmission device according to Claim 22, **characterized in that** a spring device (20; 164) is pretensioned between the double clutch housing part (22; 168) and the damper output part (18; 160), by which spring device (20; 164) the damper output part (18; 160) is pressed against a slidable friction device (19; 163) which is arranged between the damper input part (11; 155) and the damper output part (18; 160).

24. Torque transmission device according to Claim 23, **characterized in that** the damper output part (160) has on its inner face radially inside the slidable friction device (163) a recess for receiving a section of the double clutch housing part (168).

25. Torque transmission device according to any one of Claims 22 to 24, **characterized in that** the double clutch housing part (168) is formed from sheet metal and has a flange region (281) which serves for fastening the double clutch housing part (168) to the intermediate pressure plate (170).

26. Torque transmission device according to Claim 25, **characterized in that** the double clutch housing part (168) has an externally toothed region (167) which is formed integrally with the flange region (281) and in a complementary manner to an internal toothing (166) which is provided on the radially inner portion of the damper output part (160).

27. Torque transmission device according to Claim 26, **characterized in that** the externally toothed region (127) of the double clutch housing part (168) is arranged in the radial direction between the internal diameter and the external diameter of the friction linings (173) of the adjacent clutch disc (174).

28. Torque transmission device according to Claim 26 or 27, **characterized in that** a stiffening edge (290) is formed on the double clutch housing part (168) radially inside the externally toothed region (167).

29. Torque transmission device according to any one of Claims 22 to 28, **characterized in that** the damper output part (160) has substantially the form of an annular plate formed from sheet metal, on the radially inner portion of which is formed an internal toothing (166) and on the radially outer portion of which is formed at least one driver dog (161, 162) which engages in an energy storage device of the torsional vibration damping device (154).

30. Torque transmission device according to Claim 29, **characterized in that** two driver dogs (161, 162) are formed diametrically opposite one another on the radially outer portion of the damper output part (160).

31. Torque transmission device according to Claim 30, **characterized in that** a radially disposed slot (298, 299) is formed in the damper output part (160) in the region of each of the driver dogs (161, 162).

32. Torque transmission device according to any one of Claims 1 to 31, **characterized in that** a vibration damping device (8) is provided between drive unit (3) and double clutch (6).

## Revendications

1. Dispositif de transmission de couple dans une chaîne de transmission (1 ; 61) d'un véhicule automobile, comprenant un double embrayage pour le transfert de couple entre une unité d'entraînement (3 ; 63), en particulier un moteur à combustion interne, comprenant un arbre de sortie (4 ; 64 ; 151), en particulier un vilebrequin, et une boîte de vitesses (5 ; 65), avec au moins deux arbres d'entrée de boîte de vitesses (35, 36 ; 95, 96 ; 152, 153), qui sont connectés chacun de manière solidaire en rotation à un disque d'embrayage (31, 42 ; 91, 102 ; 174, 178) de l'un des embrayages, présentant des garnitures de friction, une plaque de pression intermédiaire (26 ; 78 ; 170) étant disposée entre les garnitures de friction de l'un des disques d'embrayage et les garnitures de friction de l'autre disque d'embrayage et étant connectée de manière solidaire en rotation à l'arbre de sortie de l'unité d'entraînement, les garnitures de friction des disques d'embrayage (31, 42 ; 91, 102 ; 174, 178) étant disposées entre la plaque de pression intermédiaire (26 ; 78 ; 170) et des plaques de pression (28, 39 ; 88, 100 ; 171, 172) qui peuvent être déplacées à l'aide d'un dispositif d'actionnement (46, 47 ; 106, 107 ; 196, 197), par rapport aux arbres d'entrée de boîte de vitesses, dans une direction axiale par rapport à la plaque de pression intermédiaire (26 ; 78 ; 170), afin de serrer les garnitures de friction entre la plaque de pression intermédiaire et les plaques de pression, **caractérisé en ce que** le double embrayage n'est supporté qu'au moyen de la plaque de pression intermédiaire (26 ; 78 ; 170), **en ce que** celle-ci est supportée par le biais d'un support sur palier dans la direction axiale au moins sur l'un des arbres d'entrée de boîte de vitesses (35, 36 ; 95, 96 ; 152, 153), de sorte que les forces d'actionnement du double embrayage agissant dans la direction axiale soient supportées.

2. Dispositif de transmission de couple selon la revendication 1, **caractérisé en ce que** la plaque de pression intermédiaire (26 ; 170) est supportée à l'aide d'un dispositif de palier (223), en particulier d'un palier radial (37), sur l'un des arbres d'entrée de boîte de vitesses, en particulier sur un arbre d'entrée de boîte de vitesses interne creux (36 ; 153), dans lequel un autre arbre d'entrée de boîte de vitesses (35 ; 152) est disposé de manière rotative.

3. Dispositif de transmission de couple selon la revendication 2, **caractérisé en ce que** l'un des disques d'embrayage (31) est fixé de manière détachable, c'est-à-dire séparable sans destruction, sur l'un des arbres d'entrée de boîte de vitesses, en particulier l'autre arbre d'entrée de boîte de vitesses (35).

4. Dispositif de transmission de couple selon la revendication 3, **caractérisé en ce que** le disque d'embrayage (31) fixé sur l'un des arbres d'entrée de boîte de vitesses, en particulier sur l'autre arbre d'entrée de boîte de vitesses (35), est réalisé en deux parties.

5. Dispositif de transmission de couple selon la revendication 4, **caractérisé en ce que** le disque d'embrayage (31) fixé sur l'un des arbres d'entrée de boîte de vitesses, en particulier l'autre arbre d'entrée de boîte de vitesses (35), présente une partie de moyeu (33), de laquelle part une bague de bride interne (51), qui est fixée de manière détachable, c'est-à-dire séparable sans destruction, sur une bague de bride externe (52), sur laquelle sont montés, radialement à l'extérieur, des garnitures de friction (29).

6. Dispositif de transmission de couple selon la revendication 5, **caractérisé en ce que** les deux bagues de bride (51, 52) sont connectées l'une à l'autre par au moins une connexion vissée.

7. Dispositif de transmission de couple selon l'une quelconque des revendications précédentes, **caractérisé en ce que** l'un des arbres d'entrée de boîte de vitesses est réalisé sous forme d'arbre creux (96), dans lequel est disposé l'autre arbre d'entrée de boîte de vitesses (95) de manière rotative, entre les deux arbres d'entrée de boîte de vitesses étant disposée à rotation une partie de moyeu sensiblement tubulaire (98) avec une extrémité côté entraînement et une extrémité côté boîte de vitesses, la plaque de pression intermédiaire (78) étant fixée sur l'extrémité côté entraînement de la partie de moyeu (98).

8. Dispositif de transmission de couple selon la revendication 7, **caractérisé en ce que** la partie de moyeu (98) est montée dans la région de son extrémité côté boîte de vitesses à l'intérieur de l'arbre creux (96) sur l'arbre creux (96).

9. Dispositif de transmission de couple selon la revendication 7, **caractérisé en ce que** la partie de moyeu (98) est montée dans la région de son extrémité côté boîte de vitesses à l'intérieur de l'arbre creux (96) sur l'autre arbre d'entrée de boîte de vitesses (95).

10. Dispositif de transmission de couple selon l'une quelconque des revendications précédentes, **caractérisé en ce que** le double embrayage (150 ; 310) peut être prémonté dans un carter d'embrayage.

11. Dispositif de transmission de couple selon la revendication 10, **caractérisé en ce que** le point de support du double embrayage prémonté (150 ; 310) est disposé dans la région ou à proximité du centre de gravité de l'embrayage.

12. Dispositif de transmission de couple selon l'une quelconque des revendications 1 à 11, **caractérisé en ce que** l'un des arbres d'entrée de boîte de vitesses (153) est réalisé sous forme d'arbre creux, dans lequel l'autre arbre d'entrée de boîte de vitesses (152) est disposé de manière rotative, la plaque de pression intermédiaire (170) étant montée à l'aide d'un dispositif de palier (183 ; 223 ; 253) directement sur l'un des arbres d'entrée de boîte de vitesses (152, 153), en particulier sur l'autre arbre d'entrée de boîte de vitesses (152).

13. Dispositif de transmission de couple selon l'une quelconque des revendications 1 à 11, **caractérisé en ce que** l'un des arbres d'entrée de boîte de vitesses est réalisé sous la forme d'un arbre creux (153), dans lequel l'autre arbre d'entrée de boîte de vitesses est disposé de manière rotative, la plaque de pression intermédiaire (170 ; 316) étant montée à l'aide d'un dispositif de palier (243 ; 333) sur une partie de palier de moyeu (225 ; 322) qui est fixée de manière détachable, c'est-à-dire séparable sans destruction, sur l'extrémité côté entraînement de l'autre arbre d'entrée de boîte de vitesses (152).

14. Dispositif de transmission de couple selon la revendication 13, **caractérisé en ce que** l'un des disques d'embrayage (174 ; 319) est connecté de manière solidaire en rotation à la partie de palier de moyeu (235 ; 322).

15. Dispositif de transmission de couple selon l'une quelconque des revendications 1 à 14, **caractérisé en ce que** le dispositif de palier (183 ; 223 ; 253) comprend une bague de palier extérieure (184), qui est fixée radialement à l'intérieur sur la plaque de pression intermédiaire (170), et/ou une bague de palier intérieure (185), qui est fixée radialement à l'extérieur sur l'arbre d'entrée de boîte de vitesses associé (152, 153).

16. Dispositif de transmission de couple selon la revendication 15, **caractérisé en ce que** la bague de palier intérieure (185) présente une portion porteuse (265) qui est poussée radialement à l'intérieur sur l'un des arbres d'entrée de boîte de vitesses (152, 153) de telle sorte que l'extrémité côté boîte de vitesses de la portion porteuse (265) s'applique contre un épaulement (228) qui est réalisé sur l'arbre d'entrée de boîte de vitesses (153) associé.

17. Dispositif de transmission de couple selon la revendication 16, **caractérisé en ce qu'**il part de l'extrémité côté entraînement de la portion porteuse (265) une portion de fixation (267), sur laquelle est fixée, de manière détachable, c'est-à-dire séparable sans destruction, une bague de retenue (231).

18. Dispositif de transmission de couple selon la revendication 17, **caractérisé en ce que** la bague de retenue (231) est fixée à l'aide d'au moins une connexion vissée (230) à la portion de fixation (267) de la bague de palier intérieure (225).

19. Dispositif de transmission de couple selon la revendication 18, **caractérisé en ce que** la bague de retenue présente, radialement à l'intérieur, une portion de fixation, qui exerce, en fonction de l'état de vissage de la connexion vissée (230), une telle force de fermeture sur une bague de fermeture (229), que la bague de fermeture (229) vient en prise dans une rainure annulaire qui est prévue dans l'arbre d'entrée de boîte de vitesses associé (153).

20. Dispositif de transmission de couple selon la revendication 19, **caractérisé en ce que** la bague de fermeture (229) est réalisée sous forme fendue et est précontrainte de telle sorte qu'elle puisse être enfoncée sur l'arbre d'entrée de boîte de vitesses associé (153).

21. Dispositif de transmission de couple selon l'une quelconque des revendications 15 à 20, **caractérisé en ce que** la bague de palier extérieure (184), la bague de palier intérieure (185), la bague de retenue (231) et/ou la bague de fermeture (229) sont en tôle.

22. Dispositif de transmission de couple selon l'une quelconque des revendications précédentes, **caractérisé en ce qu'**un dispositif d'amortissement des oscillations de rotation (154), notamment une roue volante à deux masses, est monté entre l'arbre de sortie (151) de l'unité d'entraînement et le double embrayage (150), lequel comprend une partie d'entrée d'amortisseur (155), qui est connectée de manière solidaire en rotation à l'arbre de sortie (151) de l'unité d'entraînement et une partie de sortie d'amortisseur (160), qui est connectée de manière détachable, c'est-à-dire séparable sans destruction, à une partie de carter du double embrayage (168), sur laquelle est fixée la plaque de pression intermédiaire (170).

23. Dispositif de transmission de couple selon la revendication 22, **caractérisé en ce qu'**un dispositif de ressort (20 ; 164) est précontraint entre la partie de carter de double embrayage (22 ; 168) et la partie de sortie d'amortisseur (18 ; 160), lequel presse la partie de sortie d'amortisseur (18 ; 160) contre un dispositif de frottement/glissement (19 ; 163), qui est disposé entre la partie d'entrée d'amortisseur (11 ; 155) et la partie de sortie d'amortisseur (18 ; 160).

24. Dispositif de transmission de couple selon la revendication 23, **caractérisé en ce que** la partie de sortie d'amortisseur (160) présente, sur son côté interne, radialement à l'intérieur du dispositif de frottement/glissement (163), un renfoncement pour recevoir une portion de la partie de carter de double embrayage (168).

25. Dispositif de transmission de couple selon l'une quelconque des revendications 22 à 24, **caractérisé en ce que** la partie de carter de double embrayage (168) est en tôle et présente une région de bride (281), qui sert à la fixation de la partie de carter de double embrayage (168) sur la plaque de pression intermédiaire (170).

26. Dispositif de transmission de couple selon la revendication 25, **caractérisé en ce que** la partie de carter de double embrayage (168) présente une région de denture extérieure (167) qui est réalisée d'une seule pièce avec la région de bride (281) et de manière complémentaire à une denture intérieure (166) qui est prévue radialement à l'intérieur sur la partie de sortie d'amortisseur (160).

27. Dispositif de transmission de couple selon la revendication 26, **caractérisé en ce que** la région de denture extérieure (127) de la partie de carter de double embrayage (168) est disposée dans la direction radiale entre le diamètre intérieur et le diamètre extérieur des garnitures de friction (173) du disque d'embrayage adjacent (174).

28. Dispositif de transmission de couple selon la revendication 26 ou 27, **caractérisé en ce qu'**un bord de rigidification (290) est réalisé radialement à l'intérieur de la région de denture extérieure (167) sur la partie de carter de double embrayage (168).

29. Dispositif de transmission de couple selon l'une quelconque des revendications 22 à 28, **caractérisé en ce que** la partie de sortie d'amortisseur (160) présente essentiellement la forme d'un disque annulaire circulaire formé de tôle, sur lequel est réalisée, radialement à l'intérieur, une denture intérieure (166) et radialement à l'extérieur, au moins un doigt d'entraînement (161, 162), qui vient en prise dans un dispositif d'accumulation d'énergie du dispositif d'amortissement des oscillations de rotation (154).

30. Dispositif de transmission de couple selon la revendication 29, **caractérisé en ce que** deux doigts d'entraînement (161, 162) sont réalisés radialement à l'extérieur et diamétralement opposés sur la partie de sortie d'amortisseur (160).

31. Dispositif de transmission de couple selon la revendication 30, **caractérisé en ce que** dans la région des doigts d'entraînement (161, 162) dans la partie de sortie d'amortisseur (160), est à chaque fois réalisée une fente (298, 299) s'étendant radialement.

32. Dispositif de transmission de couple selon l'une quelconque des revendications 1 à 31, **caractérisé en ce que** l'on prévoit entre l'unité d'entraînement (3) et le double embrayage (6), un dispositif d'amortissement des oscillations (8).
